(19) Europäisches Patentamt
European Patent Office
Office européen des brevets

(11) EP 4 722 096 A1

(12) EUROPEAN PATENT APPLICATION
published in accordance with Art. 153(4) EPC

(43) Date of publication:
08.04.2026 Bulletin 2026/15

(51) International Patent Classification (IPC):
B63B 25/16 (2006.01)     F17C 3/08 (2006.01)
F17C 13/00 (2006.01)

(21) Application number: 24815879.2

(22) Date of filing: 30.05.2024

(86) International application number:
PCT/KR2024/007407

(87) International publication number:
WO 2024/248505 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.05.2023 KR 20230069582
04.09.2023 KR 20230117283
04.09.2023 KR 20230117284

(71) Applicant: HD Korea Shipbuilding & Offshore
Engineering
Co., Ltd.
Seongnam-si, Gyeonggi-do 13553 (KR)

(72) Inventors:
• KIM, Soo Hyeon
Seongnam-si Gyeonggi-do 13553 (KR)
• RYU, Gwang Nyeon
Seongnam-si Gyeonggi-do 13553 (KR)
• YOO, Byeong Yong
Seongnam-si Gyeonggi-do 13553 (KR)

(74) Representative: Beck Greener LLP
Fulwood House
12 Fulwood Place
London WC1V 6HR (GB)

(54) THERMALLY INSULATED TANK, SHIP INCLUDING SAME, AND METHOD FOR FORMING VACUUM IN THERMALLY INSULATED TANK

(57) The present disclosure relates to a thermally insulated tank for storing liquefied gas including: a first shell for accommodating liquefied gas therein; a second shell disposed outside the first shell; and an insulating space disposed between the first shell and the second shell, wherein the insulating space is filled with an insulator and a low vacuum may be formed therein.

【Figure 25】

**Description**

[Technical Field]

The present disclosure relates to a thermally insulated tank, a ship including the same, and a method for forming a vacuum in the thermally insulated tank.

[Background Art]

Liquefied hydrogen has a problem of causing heat intrusion from the outside due to a cryogenic temperature to generate a large amount of boil-off gas. Thus, to prevent the problem, an insulation layer needs to be disposed while a high vacuum state is maintained outside the tank. Generally, a vacuum insulation structure equipped with a multi-layer insulation (MLI) has been used, and in addition, panels and membranes are used, and perlite and glass bubbles are used.
In the case of small tanks, there is no problem in using the insulation structure, but in the case of large-capacity tanks disposed on ships and land terminals, there is a problem that the vacuum operation process is not easy in order to provide a vacuum insulation structure filled with an insulator while maintaining a vacuum state of several tens of torr or less between an inner container and an outer container. That is, in the case of large-scale tanks, there is a technical difficulty in forming a high vacuum state in the insulating space because the insulating space is considerably large. In particular, there is a problem that it takes a long time to provide a high-vacuum insulation layer.
For example, when laminated insulators, separate panels, spray-type insulators, or membranes are attached to the inside or outside of the inner container, insulator installation is first difficult for large tanks, and particularly, in the case of panels, there is a high probability of thermal penetration occurring at connections between panels.
In addition, when insulator damage occurs, it is not easy to find the damaged area in the vacuum space, and when damage occurs even locally, the damaged portion becomes a thermal bridge, resulting in high heat invasion and local tank damage.
Conventionally used perlite has irregular particle shapes, and glass bubbles have characteristics of spherical particles and various particle sizes, so that the vacuum space is densely filled due to a structure in which small particles are filled between individual particles. Accordingly, it is practically difficult to form a vacuum in spaces filled with perlite or glass bubbles, and even if such spaces are formed in the vacuum state, the process requires a considerably long operation period.
Recently, powder-type insulators such as perlite and glass bubbles, which have sizes of several tens of micrometers or less, have very small diameters of several tens of micrometers and become densely filled, and thus there is a disadvantage of making it difficult to form a vacuum in the space densely filled with the powder.
As described above, in the case of thermally insulated tanks, particularly, large-capacity thermally insulated tanks, there are difficulties in vacuum operations for vacuum insulation structures, and thus there is a need for technology development that facilitates vacuum operations while providing insulation performance.

[Disclosure]

[Technical Problem]

The present disclosure has been created to solve the problems of the prior arts described above, and an object of the present disclosure is to provide a thermally insulated tank that optimizes the insulation performance of the thermally insulated tank while reducing the labor and time required to form a vacuum state in the thermally insulated tank, a ship including the same, and a method for forming a vacuum in a thermally insulated tank including an insulating space with optimized insulation performance.

[Technical Solution]

An aspect of the present disclosure provides a thermally insulated tank for storing liquefied gas including: a first shell for accommodating liquefied gas therein; a second shell disposed outside the first shell; and an insulating space disposed between the first shell and the second shell, wherein the insulating space may be filled with an insulator and a low vacuum may be formed therein.
Specifically, gas molecules in the insulating space may have at least one flow selected from a viscous flow, a slip flow, and a transition flow.
Specifically, the Knudsen number of the gas molecules in the insulating space may be 10 or less.
Specifically, the pressure in the insulating space may be 70 mTorr to 2,400 mTorr.
Specifically, the pressure in the insulating space may be a predetermined value or lower, so that in the first shell, a consumable amount of boil-off gas is generated at a demand destination that consumes the boil-off gas.

Specifically, the thermally insulated tank may further include a vacuum pump provided outside the thermally insulated tank to discharge gas in the insulating space to the outside, wherein the vacuum pump may discharge the gas in the insulating space to the outside after the liquefied gas is loaded into the first shell.

Specifically, the thermally insulated tank may further include a vacuum pipe having one end connected to the vacuum pump and the other end extending into the insulating space.

Specifically, the vacuum pump may be a low vacuum pump.

Specifically, the vacuum pipe may be disposed closer to the first shell than the second shell.

Specifically, a ship including the thermally insulated tank may further include a demand destination that consumes boil-off gas generated in the first shell, wherein the pressure in the insulating space may be a predetermined value or lower so that the boil-off gas generated in the first shell becomes an amount consumable by the demand destination, and the boil-off gas generated in the first shell may be consumed as propulsion fuel of the ship.

Another aspect of the present disclosure provides a method for forming a vacuum in a thermally insulated tank, which is provided inside a thermally insulated tank and disposed between a first shell for accommodating liquefied gas and a second shell disposed outside the first shell, the method including a first vacuum step of reducing a pressure in the insulating space, in which the insulating space may be formed in a low vacuum state.

Specifically, the method may further include a second vacuum step of loading the liquefied gas into the thermally insulated tank and then reducing the pressure in the insulating space using a vacuum pump provided outside the thermally insulated tank.

Specifically, the second vacuum step may be performed after a ship including the thermally insulated tank starts to operate.

Specifically, the second vacuum step may include a step of measuring the pressure in the thermally insulated tank; and a second main-vacuum step of repeating a process of discharging gas in the insulating space to the outside to reduce the pressure in the insulating space to a predetermined value or lower, and observing pressure changes in the insulating space, when the pressure in the thermally insulated tank is higher than a predetermined pressure.

Specifically, the second vacuum step may discharge the gas in the insulating space to the outside through a vacuum pipe having one end connected to the vacuum pump and the other end extending into the insulating space.

[Advantageous Effects]

According to the thermally insulated tank, the ship including the same, and the method for forming the vacuum in the thermally insulated tank of the present disclosure, it is possible to reduce the time required to holding the vacuum in the insulating space while ensuring insulation performance in the thermally insulated tank.

[Description of Drawings]

FIG. 1 is a diagram illustrating a thermally insulated tank and a ship including the same according to an embodiment of the present disclosure.

FIG. 2 is a diagram illustrating a thermally insulated tank according to an embodiment of the present disclosure.

FIG. 3 is a diagram illustrating a thermally insulated tank according to another embodiment of the present disclosure.

FIG. 4 is a diagram illustrating a thermally insulated tank according to another embodiment of the present disclosure.

FIGS. 5A and 5B are diagrams illustrating a thermally insulated tank according to another embodiment of the present disclosure.

FIG. 6 is a diagram illustrating a thermally insulated tank according to an embodiment of the present disclosure.

FIG. 7 is a diagram illustrating a thermally insulated tank according to an embodiment of the present disclosure.

FIG. 8 is a diagram illustrating a thermally insulated tank and a storage terminal including the same according to an embodiment of the present disclosure.

FIG. 9 is a diagram illustrating a thermally insulated tank according to an embodiment of the present disclosure.

FIG. 10 is a diagram illustrating a thermally insulated tank according to an embodiment of the present disclosure.

FIG. 11 is a diagram illustrating a thermally insulated tank according to another embodiment of the present disclosure.

FIG. 12 is a diagram illustrating a thermally insulated tank according to another embodiment of the present disclosure.

FIG. 13 is a diagram illustrating a thermally insulated tank according to another embodiment of the present disclosure.

FIG. 14 is a diagram illustrating a thermally insulated tank according to another embodiment of the present disclosure.

FIGS. 15A and 15B are diagrams illustrating a thermally insulated tank and a ship including the same according to an embodiment of the present disclosure.

FIG. 16 is a diagram illustrating a thermally insulated tank and a ship including the same according to an embodiment of the present disclosure.

FIG. 17 is a diagram illustrating a thermally insulated tank according to an embodiment of the present disclosure.

FIG. 18 is a diagram illustrating a thermally insulated tank according to another embodiment of the present disclosure.

FIG. 19 is a diagram illustrating a thermally insulated tank according to another embodiment of the present disclosure.

FIG. 20 is a diagram illustrating a thermally insulated tank according to another embodiment of the present disclosure.

FIG. 21 is a diagram illustrating a vacuum pipe disposed in a thermally insulated tank according to an embodiment of the present disclosure.

FIG. 22 is a diagram illustrating a vacuum pipe disposed in a thermally insulated tank according to an embodiment of the present disclosure.

FIG. 23 is a diagram illustrating a vacuum pipe disposed in a thermally insulated tank according to an embodiment of the present disclosure.

FIG. 24 is a diagram illustrating a vacuum pipe disposed in a thermally insulated tank according to an embodiment of the present disclosure.

FIG. 25 is a diagram illustrating a thermally insulated tank according to another embodiment of the present disclosure.

FIG. 26A is a diagram for describing a flow of gas molecules as a viscous flow, and FIG. 26B is a diagram for describing a flow of gas molecules as a molecular flow.

FIG. 27 is a graph showing a relationship between the Knudsen number and pressure.

FIG. 28 is a graph showing experimental results of a relationship between a pressure and a vacuum time of an insulating space.

FIG. 29 is a graph showing a relationship between the pressure in an insulating space and thermal conductivity.

FIG. 30 is a flowchart of a first vacuum step of a method for forming a vacuum in an insulating space according to an embodiment of the present disclosure.

FIG. 31 is a flowchart of a second vacuum step of the method for forming the vacuum in the insulating space according to an embodiment of the present disclosure.

FIG. 32 is a diagram illustrating a thermally insulated tank and a ship including the same according to another embodiment of the present disclosure.

[Best Mode]

The objects, specific advantages, and new features of the present disclosure will be more apparent from the following detailed description and preferred embodiments taken in conjunction with the accompanying drawings. When reference numerals are imparted to components of each drawing in this specification, it should be noted that the same components are denoted by the same reference numerals as much as possible, even if they are shown in different drawings. Further, in describing the present invention, a detailed description of known related technologies will be omitted when it is determined to unnecessarily obscure the gist of the present invention.

In addition, it should be noted that in the following description, the inward and outward directions are defined such that a direction toward the center of a storage space is the inward direction.

Hereinafter, a thermally insulated tank 600 according to an embodiment of the present disclosure and a ship 30 including the same will be described.

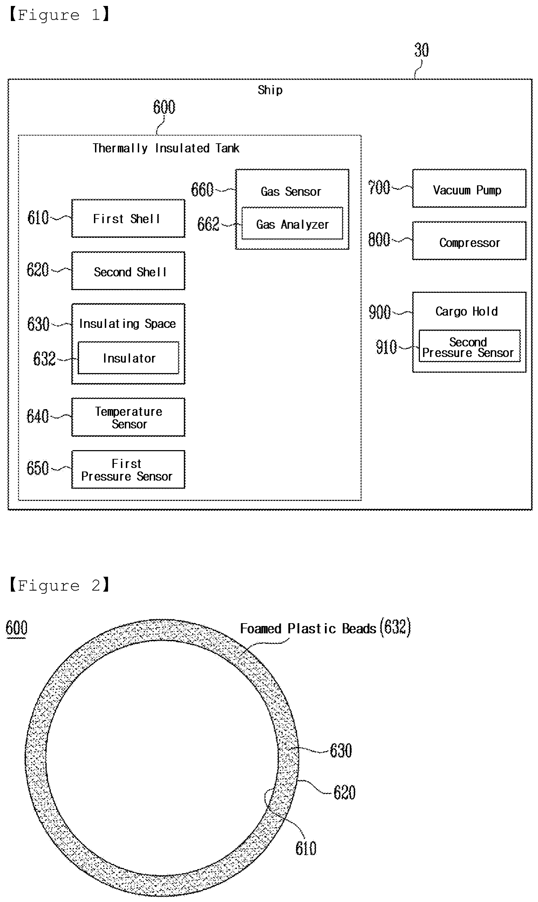

FIG. 1 is a diagram illustrating a thermally insulated tank and a ship including the same according to an embodiment of the present disclosure.

As illustrated in FIG. 1, the thermally insulated tank 600 according to an embodiment of the present disclosure is an independent thermally insulated tank 600 for storing liquefied gas, including a first shell 610 for accommodating liquefied gas therein, a second shell 620 disposed outside the first shell 610, and an insulating space 630 disposed between the first shell 610 and the second shell 620, wherein the insulating space 630 is a space filled with an insulator 632 and vacuum-treated, and the insulator 632 may be densely filled in the insulating space 630.

The insulator 632 in the present disclosure may include one or more of a foamed plastic beads, polyurethane, polystyrene, polyethylene, polyisocyanurate, aerogel blankets, fumed silica, calcium silicate, mineral wool, glass wool, glass microfiber, perlite, and hollow glass microspheres. The hollow glass microspheres may include glass bubbles, which are a trade name manufactured by 3M.

The insulating space 630 filled with the insulator 632 may be in a vacuum state.

In the present disclosure, the vacuum is formed in the insulating space 630, thereby enhancing the thermal insulation performance and reducing the generation of boil-off gas from the liquefied gas.

The ship 30 according to the present disclosure may include the first shell 610, the second shell 620, the insulating space 630 disposed between the first shell 610 and the second shell 620 and filled with the insulator 632, and the vacuum pump 700 capable of adjusting the vacuum degree of the insulating space 630 of the thermally insulated tank 600, and may include a compressor 800 used to transfer boil-off gas generated in the thermally insulated tank 600 to the outside of the thermally insulated tank 600.

According to the embodiment, the ship 30 may include a vacuum pipe 710 disposed in the insulating space 630 disposed between the first shell 610 and the second shell 620.

Accordingly, according to an embodiment of the present disclosure, the insulating space 630 may be filled with the insulator 632 and vacuum-treated using only the vacuum pump 700 to form a vacuum in the insulating space 630, but according to another embodiment, a vacuum pipe 710 may also be further included.

In addition, according to another embodiment of the present disclosure, the insulating space 630 may be filled with polyurethane foam as the insulator 632 and vacuum-treated using only the vacuum pump 700 to form a vacuum in the insulating space 630, but according to yet another embodiment, a vacuum pipe 710 may also be further included.

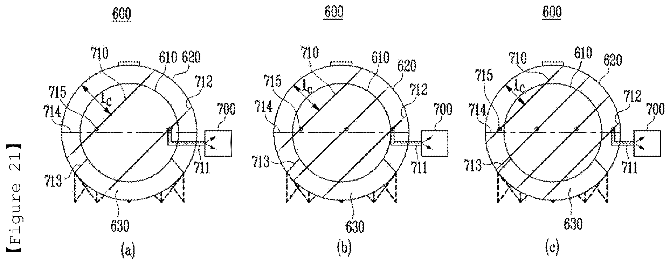

When a space between the insulators 632 is formed in a vacuum state while the insulating space 630 is filled with the insulator 632, exhaustion may not proceed smoothly at a location distant from the vacuum pump 700 that forms the vacuum, and as the size of the thermally insulated tank 600 increases, it may be difficult to form the vacuum in the insulating space 630. Accordingly, according to the embodiment of the present disclosure, the vacuum pipe 710 may be further included in the insulating space 630 in the thermally insulated tank 600, and the vacuum pipe 710 will be described with reference to FIGS. 21 to 24 below.

According to the present disclosure, boil-off gas (BOG) generated in the thermally insulated tank 600 may be transferred to the outside of the thermally insulated tank. The ship 30 may include a compressor 800 that is used to transfer the boil-off gas (BOG) generated in the thermally insulated tank 600 to the outside of the thermally insulated tank 600, and the boil-off gas (BOG) is transferred to the outside through the compressor 800, thereby reducing the internal pressure of the first shell 610 to atmospheric pressure or lower.

By maintaining the first shell 610 to an atmospheric pressure or less, even if a leak occurs in the first shell 610, the leaked liquefied gas may be safely stored.

The suction pressure of the compressor 800 in the present disclosure may be a vacuum, and the suction pipe of the compressor 800 may be a double pipe. In this case, even if a leak occurs in the pipe, there is an advantage of preventing external air from flowing into the compressor 800.

Although not illustrated in the drawing, the ship 30 according to the present disclosure may further include a pipe system (not shown) including the compressor 800 having a double pipe.

In addition, the ship 30 of the present disclosure may use the boil-off gas (BOG) generated in the thermally insulated tank 600 as fuel and may include an engine, a fuel cell, or a boiler that may be used as fuel.

In addition, the ship 30 according to the present disclosure includes a cargo hold 900 filled with inert gas, and the thermally insulated tank 600 may be disposed in the cargo hold 900.

In this regard, each configuration of the thermally insulated tank 600 according to the present disclosure illustrated in FIG. 1 will be described through FIGS. 2 to 5 below.

Conventionally used perlite has irregular particle shapes, and glass bubbles have spherical particles and various particle sizes, which had difficulty in the process of forming a vacuum after filled with the insulator.

This is because, in the case of perlite and glass bubbles, the vacuum space is densely filled by a structure where small particles are filled between the particles, making it practically difficult to form a vacuum in spaces filled with perlite or glass bubbles using a vacuum pump, and even if the corresponding spaces are formed in a vacuum state, there is a problem that it takes a considerably long operating period. In addition, in the case of fine particles such as perlite and glass bubbles having sizes of several tens of micrometers or less, the total surface area becomes larger, and as an area contacted by the flow passing between the fine particles increases, resistance increases, making it more difficult to form a vacuum.

Meanwhile, expanded polystyrene (EPS) refers to foamed polystyrene, which is a white foamed plastic material produced from solid beads of polystyrene. EPS is a foamed product formed by injecting hydrocarbon gas into a polystyrene (PS) resin and then expanding the resin with steam, and has very low thermal conductivity, low hygroscopicity, and excellent cushioning performance. Expanded polystyrene bead (EPS Bead) refers to a foamed polystyrene bead, which means a material with stable insulation performance made by compressing and molding polystyrene granules (EPS).

Fire safety may be secured using semi-incombustible EPS, and by coating EPS beads with incombustible inorganic materials or applying special treatment, the EPS may have semi-incombustible performance on all surfaces even when cut.

Expanded polypropylene (EPP) refers to foamed polypropylene, which is a product made by foaming a polyolefin-based 'polypropylene (PP)' material, and has characteristics of good heat resistance, strong resistance to moisture and chemicals, and strong resistance to external stress. EPP has the characteristic of excellent recovery against repetitive impact and deformation, and a foam cast with EPP beads has the characteristic of maintaining high dimensional stability when exposed to extreme temperatures.

FIG. 2 is a diagram illustrating a thermally insulated tank according to an embodiment of the present disclosure.

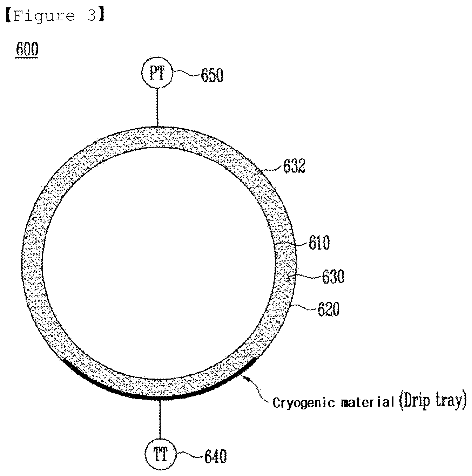

FIG. 3 is a diagram illustrating a thermally insulated tank according to another embodiment of the present disclosure.

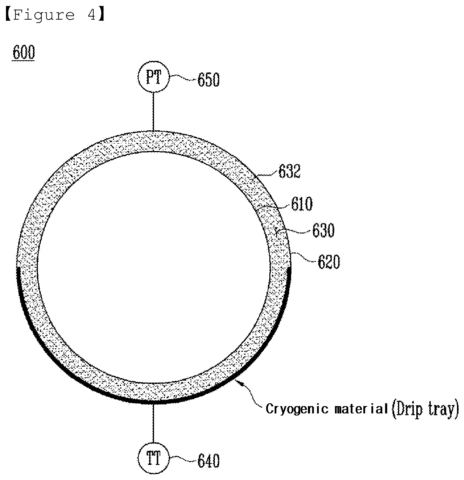

FIG. 4 is a diagram illustrating a thermally insulated tank according to another embodiment of the present disclosure.

As illustrated in FIGS. 2 to 4, the thermally insulated tank 600 according to the present disclosure is an independent tank, which may be a MOSS type (Type-B) spherical tank, and the insulating space 630 disposed between the first shell 610 and the second shell 620 of the thermally insulated tank 600 may be filled with the insulator 632.

The first shell 610 according to an embodiment of the present disclosure may be atmospheric pressure tank, and the atmospheric pressure referred to in the first shell 610 of the present disclosure means a state of 0 to 0.7 barg, considering boil-off gas (BOG) generated inside.

In addition, according to another embodiment, the first shell 610 may be a pressurized tank of 0.7 barg or more. 0 barg means 1 atm and corresponds to a pressurization of 1.7 atm.

According to the embodiment of the present disclosure, the vapor pressure inside the first shell 610 may be maintained in a vacuum state of atmospheric pressure or less, so that the ship 30 is operable even when the vapor pressure of the first shell 610 is in a vacuum state of atmospheric pressure (760 torr) or less.

An alarm occurs when the vapor pressure inside the first shell 610 is atmospheric pressure or less, and an alarm for pressure drop inside the first shell may occur at atmospheric pressure or less, and a low-pressure alarm value of the first shell 610 may be atmospheric pressure or less.

As described above, the ship 30 according to the present disclosure is able to operate even when the internal pressure of the first shell 610 is a vacuum pressure of atmospheric pressure or less, and is also able to operate when the pressure drops to atmospheric pressure or less during a process of unloading liquefied gas in the thermally insulated tank 600.

As illustrated in FIGS. 3 and 4, the first shell 610 for accommodating the liquefied gas therein according to the present disclosure may be made of a cryogenic material, and the insulating space 630 filled with the insulator 632 between the first shell 610 and the second shell 620 may be filled with inert gas.

According to the embodiment, the insulating space 630 may be filled with inert gas such as nitrogen gas, and then the gas may be removed to form a vacuum in the insulating space 630 so that the residual gas becomes inert gas.

In yet another embodiment, the insulating space 630 may be filled with hydrogen gas and then formed in the vacuum, so that the residual gas becomes hydrogen gas.

The second shell 620 may be at least partially formed of a cryogenic material, and FIG. 2 illustrates an embodiment in which only a partial region including the lowermost portion is formed of a cryogenic material.

FIG. 4 illustrates an embodiment in which a larger area of the second shell 620 is formed of a cryogenic material than in FIG. 3, and it can be confirmed that the entire lower hemisphere of the second shell 620 is formed of a cryogenic material.

As such, the lower portion of the second shell 620 made of a cryogenic material may serve as a drip tray.

In addition, as illustrated in FIGS. 3 and 4, a temperature sensor 640 may be disposed at a lower portion of the second shell 620.

However, the position of the temperature sensor 640 is not limited to the positions illustrated in FIGS. 3 and 4, and may be any position capable of measuring the temperature of an object that settles at the bottom.

According to the embodiment of the present disclosure, a first pressure sensor 650 for measuring the pressure in the insulating space 630 may be included.

The first pressure sensor 650 may be disposed at any position capable of measuring the internal pressure of the insulating space 630, and although not illustrated in FIGS. 3 and 4, a gas sensor 660 for detecting a component of gas inside the insulating space 630 may be further included.

The gas sensor 660 may analyze the component of the gas present in the insulating space 630 and detect changes in the gas component, thereby determining whether the gas is changed.

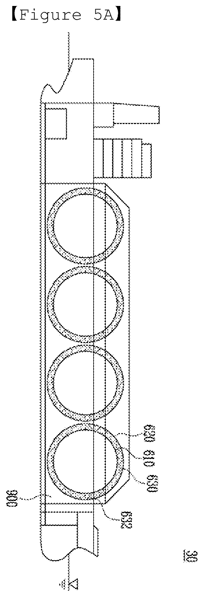

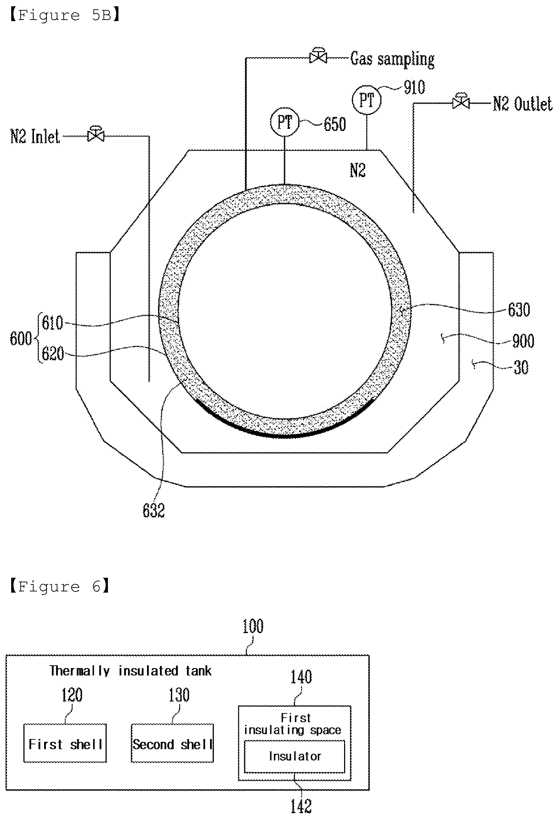

FIGS. 5A and 5B are diagrams illustrating a thermally insulated tank according to another embodiment of the present disclosure.

As the thermally insulated tank 600 according to another embodiment of the present disclosure, FIGS. 5A and 5B illustrate a cargo hold 900 filled with inert gas in which the thermally insulated tank 600 is disposed inside the ship 30, and the thermally insulated tank 600 is disposed inside the cargo hold 900 of the ship 30.

As the inert gas, nitrogen gas may be used as illustrated in FIG. 5, but is not limited thereto.

The upper portion of the thermally insulated tank 600 may further include a gas sampling configuration, and may further include a gas analyzer 662 that analyzes the composition of the gas collected above.

According to the embodiment, as illustrated in FIG. 5, the thermally insulated tank 600 may include both a first pressure sensor 650 for measuring the pressure in the insulating space 630 and a second pressure sensor 910 for measuring the pressure of the cargo hold 900, and may further include pipes and valves capable of injecting or discharging nitrogen gas into the cargo hold 900.

In the thermally insulated tank 600 according to the present disclosure, when a leak occurs from the first shell 610, a pressure change is detected through the first pressure sensor 650, and in the case of an LNG tank, HC in the insulating space 630 is measured, and then a temperature is measured through a drip tray at the bottom of the second shell 620 to detect the leak through the change.

When the leak occurs in the second shell 620, the leak may be detected by detecting a pressure change in the insulating space 630 through the first pressure sensor 650 after detecting a pressure change in the insulating space 630 or a pressure change in the cargo hold 900.

Hereinafter, first, a thermally insulated tank 100 according to an embodiment of the present disclosure and a storage terminal 10 including the same will be described.

As illustrated in FIG. 6, the thermally insulated tank 100 according to an embodiment of the present disclosure is a thermally insulated tank 100 for storing liquefied gas, including a first shell 120 and a second shell 130, and may include a first insulating space 140 disposed between the first shell 120 and the second shell 130, filled with an insulator 142 and vacuum-treated, in which the first insulating space 140 may be densely filled with the insulator 142.

The insulator 142 in the present disclosure may include one or more of foamed plastic beads, polyurethane, polystyrene, polyethylene, polyisocyanurate, aerogel blankets, fumed silica, calcium silicate, mineral wool, glass wool, glass microfiber, perlite, and hollow glass microspheres.

For example, the first insulating space 140 between the first shell 120 and the second shell 130 may be filled with the insulator 142, and the first insulating space 140 filled with the insulator 142 may be in a vacuum state.

According to embodiments, the insulator 142 used in the present disclosure may be coated, and a coating material may be a material different from the insulator 142. For example, EPS beads may be coated with a non-combustible inorganic material or may also be coated with a flame retardant material. In addition, the EPS beads may also be coated with a composite composition consisting of a flame retardant and various other inorganic materials, and the coating material is not limited to those listed above.

According to an embodiment of the present disclosure, the first insulating space 140 may include a getter (not shown).

The getter is configured to maintain the first insulating space 140 at a high vacuum for a long period, and the getter, which is a gas absorber, may be included in the first insulating space 140 to remove any gas generated inside or any gas infiltrating from the outside.

The getter may be disposed at any location within the first insulating space 140, and in an embodiment, may be in a form attached to one side of a wall of the first insulating space 140.

According to an embodiment of the present disclosure, the vapor pressure in the first shell 120 enables a vacuum state of atmospheric pressure or less. That is, the first shell 120 is operable even when the vapor pressure is in a vacuum state of atmospheric pressure (760 torr) or less, and an alarm may occur when the vapor pressure in the first shell 120 is atmospheric pressure or less, in which a low-pressure alarm value of the first shell 120 may be atmospheric pressure or less.

As described above, the storage terminal 10 according to the present disclosure is able to operate even when the internal pressure of the first shell 120 is a vacuum pressure of atmospheric pressure or less, and is also able to operate when the pressure drops to atmospheric pressure or less during a process of unloading liquefied gas in the thermally insulated tank 100.

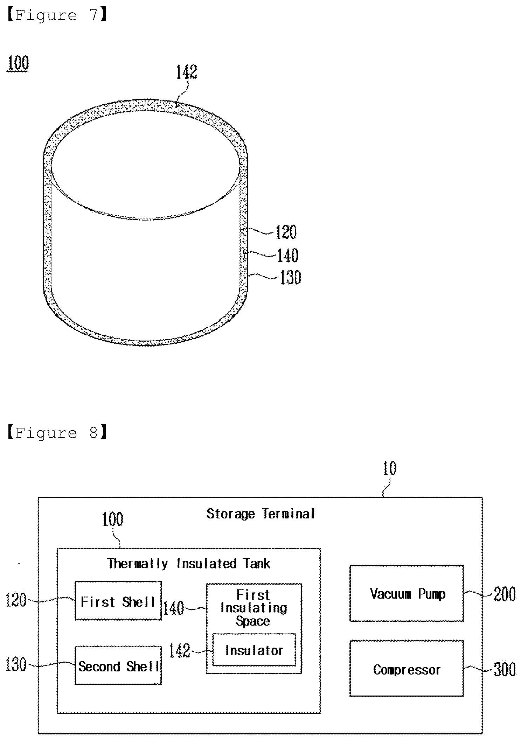

FIG. 7 is a diagram illustrating a thermally insulated tank according to an embodiment of the present disclosure.

As illustrated in FIG. 7, the thermally insulated tank 100 according to an embodiment of the present disclosure includes a first shell 120 for accommodating liquefied gas therein, and a second shell 130 disposed outside the first shell 120, and may include a first insulating space 140 disposed between the first shell 120 and the second shell 130.

According to an embodiment, the first insulating space 140 may be in a vacuum state filled with an insulator 142.

According to another embodiment, the first shell 120 may further include an insulation layer (not shown), in which membranes, insulation blankets, insulation panels, and the like may be used as insulators, and hydrogen gas may be filled therein.

The first shell 120 serves to maintain the liquefied gas. According to the embodiment, a nickel Ni component may be included at 9%, and the second shell 130 serves to maintain the internal insulating space and serves as a structural body of the thermally insulated tank 100.

At least one of the first shell 120 and the second shell 130 of the present disclosure may be made of a concrete material. That is, at least one of the inner and outer sides of the first insulating space 140 filled with the insulator has a structure made of concrete disposed therein, and has a structurally load-bearing structure.

In the present disclosure, a barrier (not shown) may be disposed in the first shell 120, and the barrier (not shown) may be made of a cryogenic material such as SUS, Invar, etc., but the material is not limited thereto.

The first shell 120 may use a reinforced concrete material consisting of steel reinforcement and concrete.

The steel reinforcement is generally made of carbon steel, and particularly when exposed to seawater in marine structures, epoxy-coated steel reinforcement, galvanized steel reinforcement, or stainless steel reinforcement may be used.

The steel reinforcement used in the first shell 120 of the present disclosure may be made of a cryogenic material having excellent resistance in a cryogenic environment, and in one embodiment, stainless steel may be used.

The second shell 130 of the present disclosure serves to maintain structural strength in the thermally insulated tank 100, and the second shell 130 may be made of a room-temperature material, and preferably a concrete material.

FIG. 8 is a diagram illustrating a thermally insulated tank and a storage terminal including the same according to an embodiment of the present disclosure.

As illustrated in FIG. 8, the storage terminal 10 according to one embodiment of the present disclosure includes a thermally insulated tank 100 including a first shell 120, a second shell 130, and a first insulating space 140 filled with an insulator 142 disposed between the first shell 120 and the second shell 130, and may include a vacuum pump 200 and a compressor 300.

The storage terminal 10 of the present disclosure may be installed on land or at sea.

The storage terminal 10 may include a vacuum pump 200 capable of adjusting the vacuum degree of the first insulating space 140 of the thermally insulated tank 100.

The vacuum pump 200 is operable even after the thermally insulated tank 100 and the storage terminal 10 are manufactured, and the vacuum degree of the first insulating space 140 may be adjusted using the vacuum pump 200.

According to the embodiment, the vacuum pump 200 may include a vacuum pipe 210 disposed in the first insulating space 140 disposed between the first shell 120 and the second shell 130.

According to an embodiment of the present disclosure, the first insulating space 140 may be filled with the insulator 142 and vacuum-treated using only the vacuum pump 200 to form a vacuum in the first insulating space 140, but according to another embodiment, the vacuum pipe 210 may also be further included.

When the vacuum is formed in the space between the insulators 142 while the first insulating space 140 is filled with the insulator 142, exhaustion may not be performed smoothly at a location distant from the vacuum pump 200 that forms the vacuum. As the size of the thermally insulated tank 100 increases, it may be difficult to form a vacuum in the first insulating space 140, and thus, the vacuum pipe 210 may be further included in the first insulating space 140 in the thermally insulated tank 100, and the vacuum pipe 210 will be described with reference to FIGS. 21 to 24 below.

According to an embodiment of the present disclosure, the vapor pressure in the first shell 120 enables a vacuum state of atmospheric pressure or less. That is, the inside of the first shell 120 may or may not be under a vacuum.

The first shell 120 is operable when the vapor pressure is in a vacuum state of atmospheric pressure (760 torr) or less, and an alarm may occur when the vapor pressure in the first shell 120 is atmospheric pressure or less, in which a low-pressure alarm value of the first shell 120 may be atmospheric pressure or less.

In addition, according to the present disclosure, boil-off gas (BOG) generated in the first shell 120 may be transferred to the outside of the thermally insulated tank 100.

The present disclosure may include a compressor 300 that is used to transfer the boil-off gas (BOG) generated in the thermally insulated tank 100 to the outside of the thermally insulated tank 100, and the boil-off gas (BOG) is transferred to the outside through the compressor 300, thereby reducing the internal pressure of the first shell 120 to atmospheric pressure or less.

The suction pressure of the compressor 300 in the present disclosure may be under a vacuum.

A suction pipe of the compressor 300 may be a double pipe, and in this case, there is an advantage of preventing external air from flowing into the compressor 300 even if a leak occurs in the pipe.

Although not illustrated in the drawing, the storage terminal 10 according to the present disclosure may further include a pipe system (not shown) including the compressor 300 having a double pipe, and may include an engine, a fuel cell, or a boiler that may use boil-off gas (BOG) generated from the thermally insulated tank 100 as fuel.

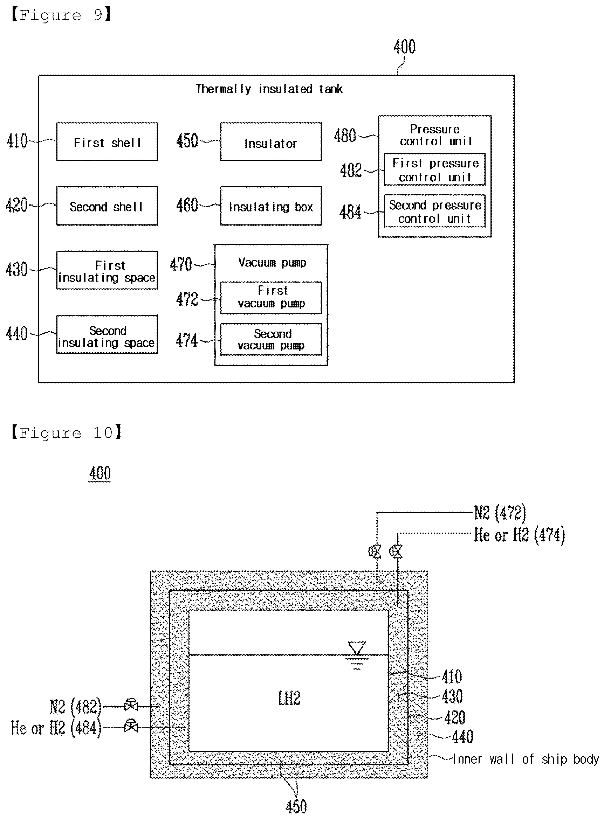

Among the contents described in FIGS. 6 to 8, those that overlap with the various embodiments to be described below are described in the descriptions for FIGS. 9 to 20, respectively.

The thermally insulated tank 100 and the storage terminal 10 including the same according to one embodiment of the present disclosure have been described above, and hereinafter, a thermally insulated tank 400 and a ship 20 including the thermally insulated tank 400 according to an embodiment of the present disclosure will be described.

FIG. 9 is a diagram illustrating a thermally insulated tank according to an embodiment of the present disclosure.

As shown in FIG. 9, a thermally insulated tank 400 according to one embodiment of the present disclosure is a membrane thermally insulated tank 400 for storing liquefied gas, including: a first shell 410 for accommodating liquefied gas therein, a second shell 420 disposed outside the first shell 410, a first insulating space 430 disposed between the first shell 410 and the second shell 420, and a second insulating space 440 disposed between the second shell 420 and an inner wall of a ship body disposed outside the second shell 420, wherein the first insulating space 430 and the second insulating space 440 are insulating spaces which are filled with an insulator 450 and vacuum-treated, and the first insulating space 430 and the second insulating space 440 may be densely filled with the insulator 450.

The insulator 450 in the present disclosure may include one or more of foamed plastic beads, polyurethane, polystyrene, polyethylene, polyisocyanurate, aerogel blankets, fumed silica, calcium silicate, mineral wool, glass wool, glass microfiber, perlite, and hollow glass microspheres.

The first insulating space 430 and the second insulating space 440 filled with the insulator 450 according to the present disclosure may be in a vacuum state.

In the present disclosure, the first insulating space 430 and the second insulating space 440 are formed in a vacuum state, thereby enhancing thermal insulation performance and reducing generation of boil-off gas from the liquefied gas.

According to an embodiment of the present disclosure, the vapor pressure in the first shell 410 enables a vacuum state of atmospheric pressure or less. That is, the first shell 410 is operable even when the vapor pressure is in a vacuum state of atmospheric pressure (760 torr) or less, and an alarm may occur when the vapor pressure in the first shell 410 is atmospheric pressure or less, in which a low-pressure alarm value of the first shell 410 may be atmospheric pressure or less.

Each configuration of the thermally insulated tank according to the present disclosure illustrated in FIG. 9 will be described through FIGS. 10 to 15 below.

FIG. 10 is a diagram illustrating a thermally insulated tank according to an embodiment of the present disclosure.

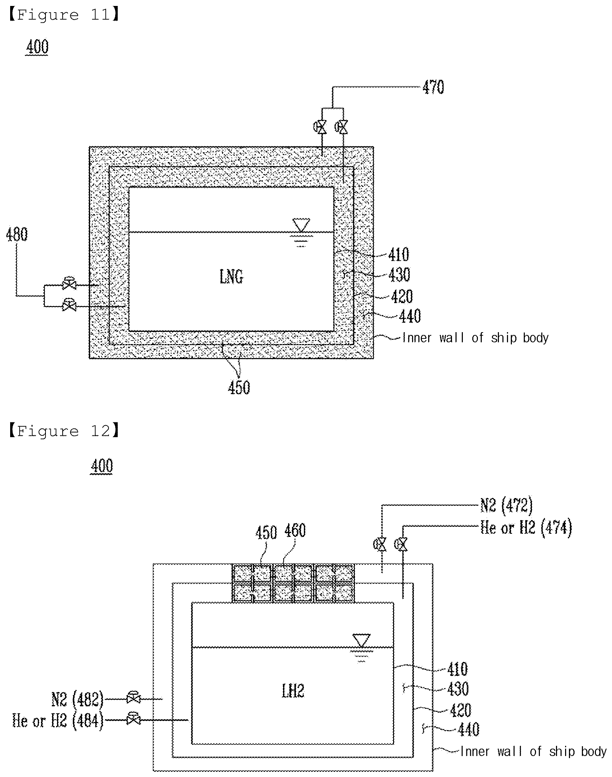

FIG. 11 is a diagram illustrating a thermally insulated tank according to another embodiment of the present disclosure.

As illustrated in FIGS. 10 and 11, the thermally insulated tank 400 according to an embodiment of the present disclosure may include a vacuum pump 470 and a pressure control unit 480.

As illustrated in FIG. 10, the first insulating space 430 and the second insulating space 440 may be filled with different gases, but as illustrated in FIG. 11, the first insulating space 430 and the second insulating space 440 may also be filled with the same gas.

First, FIG. 10 illustrates a case in which when the liquefied gas stored in the thermally insulated tank 400 is liquefied hydrogen, the second insulating space 440 is filled with nitrogen gas, and the first insulating space 430 is filled with helium gas or hydrogen gas, but a type of gas filled in each space is not limited to those listed above.

When filled with the different gases, when the liquefied gas accommodated in the first shell 410 is liquefied hydrogen, the first insulating space 430 is filled with hydrogen gas or helium gas having a temperature lower than or equal to a cooling temperature of the liquefied hydrogen, which is to prevent freezing of residual gas in the first insulating space 430.

In addition, the second insulating space 440 is filled with nitrogen gas which is less expensive than hydrogen or helium gas, as non-flammable gas having a temperature higher than or equal to the cooling temperature of the liquefied hydrogen, which has an advantage of reducing costs.

The thermally insulated tank 400 according to the present disclosure may include a vacuum pump 470 that forms a vacuum in the first insulating space 430 and the second insulating space 440 filled with gas, and may include a pressure control unit 480 that controls the pressure in the first insulating space 430 and the second insulating space 440 by supplying residual gas of the first insulating space 430 and the second insulating space 440 after the vacuum operation.

That is, as illustrated in FIG. 11, the thermally insulated tank 400 according to the present disclosure may include a vacuum pump 470 capable of adjusting the vacuum degree of the first insulating space 430 and the second insulating space 440, and the vacuum pump 470 is able to operate even after drying of the thermally insulated tank 400 and the ship 20.

Unlike FIG. 11, FIG. 10 illustrates a case where the first insulating space 430 and the second insulating space 440 are filled with different gases, and may include a first vacuum pump 472 for forming a vacuum in the first insulating space 430, and a second vacuum pump 474 for forming a vacuum in the second insulating space 440.

In addition, after the vacuum operation, the thermally insulated tank 400 may include a first pressure control unit 482 for controlling the pressure in the first insulating space 430 by supplying the same gas as the residual gas in the first insulating space 430, and a second pressure control unit 484 for controlling the pressure in the second insulating space 440 by supplying the same gas as the residual gas in the second insulating space 440, respectively.

The thermally insulated tank 400 of FIG. 10 is different from FIG. 11 which includes a vacuum pump 470 that forms a vacuum in the first insulating space 430 and the second insulating space 440 filled with the same gas, and includes a pressure control unit 480 that controls the pressure in the first insulating space 430 and the second insulating space 440 by supplying the same gas as the residual gas of the first insulating space 430 and the second insulating space 440 after the vacuum operation. As an example, the same residual gas may be nitrogen gas.

The liquefied gas to be stored in the thermally insulated tank 400 of the present disclosure may be liquefied hydrogen as illustrated in FIG. 10, but is not limited thereto, and may include LNG as illustrated in FIG. 11.

FIG. 12 is a diagram illustrating a thermally insulated tank according to another embodiment of the present disclosure.

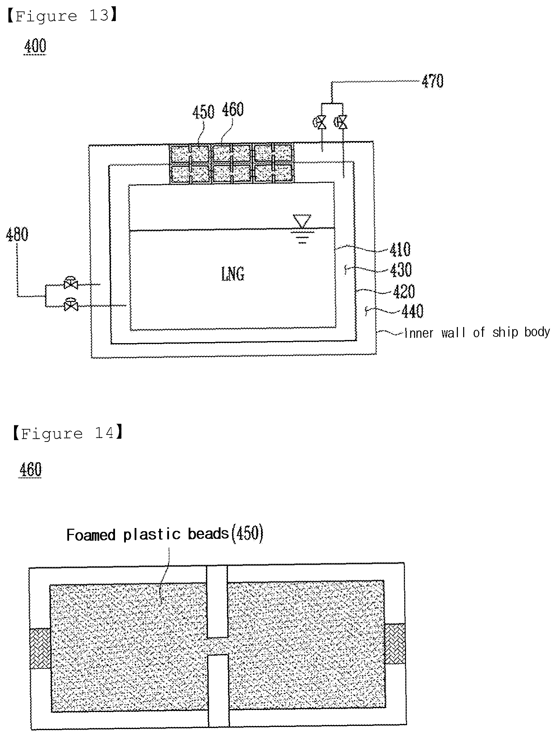

FIG. 13 is a diagram illustrating a thermally insulated tank according to another embodiment of the present disclosure.

As illustrated in FIGS. 12 and 13, the thermally insulated tank 400 according to the embodiment of the present disclosure may be disposed with an insulating box 460 filled with the insulator 450.

That is, the insulator 450 is filled inside the insulating box 460, and the insulating box 460 filled with the insulator 450 may be disposed in at least one of the first insulating space 430 and the second insulating space 440.

FIGS. 12 and 13 illustrate a case where the insulating boxes 460 are disposed in both the first insulating space 430 and the second insulating space 440, and the manufacturing process of the thermally insulated tank 400 in FIGS. 12 and 13 may be disposing the insulating box 460 filled with the insulator in the first insulating space 430 and the second insulating space 440, and then forming a vacuum in the first insulating space 430 and the second insulating space 440.

FIG. 12 illustrates an embodiment where when the liquefied gas stored in the thermally insulated tank 400 is liquefied hydrogen as illustrated in FIG. 10, the second insulating space 440 is filled with nitrogen gas, and the first insulating space 430 is filled with helium gas or hydrogen gas.

That is, as a case where the first insulating space 430 and the second insulating space 440 are filled with different gases, the thermally insulated tank 400 may include a first vacuum pump 472 for forming a vacuum in the first insulating space 430, and a second vacuum pump 474 for forming a vacuum in the second insulating space 440. In addition, after the vacuum operation, the thermally insulated tank 400 may include a first pressure control unit 482 for controlling the pressure in the first insulating space 430 by supplying the same gas as the residual gas in the first insulating space 430, and a second pressure control unit 484 for controlling the pressure in the second insulating space 440 by supplying the same gas as the residual gas in the second insulating space 440.

FIG. 13 illustrates a case where the first insulating space 430 and the second insulating space 440 are filled with the same gas as illustrated in FIG. 10, and the thermally insulated tank 400 may include one vacuum pump 470 for forming a vacuum in the first insulating space 430 and the second insulating space 440 filled with the same gas, and may include one pressure control unit 480 for controlling the pressure in the first insulating space 430 and the second insulating space 440 after vacuum operation through the vacuum pump 470.

FIG. 14 is a diagram illustrating a thermally insulated tank according to another embodiment of the present disclosure.

FIG. 14 illustrates an insulating box 460 disposed in the first insulating space 430 and the second insulating space 440 according to another embodiment of the present disclosure, in which the insulating box 460 may have a form including channels through which gas moves.

After the insulating box 460 filled with the insulator 450 is disposed in the first insulating space 430 and the second insulating space 440, vacuum operation is enabled by moving the gas through the channels of the insulating box 460 during the process of forming the vacuum.

According to the embodiment, the inside of the insulating box 460 is in a vacuum state filled with the insulator 450, the insulating box 460 may be in the form of a box consisting of only one space, and a plurality of insulating boxes 460 in the form of a single box may be disposed to be connected with each other in the first insulating space 430 and the second insulating space 440.

However, the shape of the insulating box 460 is not limited thereto and may be a connected structure consisting of a plurality of spaces.

As illustrated in FIG. 14, the insulating box 460 may include one or more reinforcing members that separate one space into two spaces, and the shape of the insulating box 460 is not limited to the shapes listed above and may be any shape formed in a vacuum space filled with the insulator 450.

According to the embodiment, the thermally insulated tank 400 may further include a load transfer unit (not shown) that transfers the load of liquefied gas from the inside of the thermally insulated tank 400 to the inner wall of the ship body. The load transfer unit (not shown) may be in the form of a reinforcing member that separates spaces as illustrated in FIG. 14, and may include any structure capable of transferring a load from the first shell 410 to the inner wall of the ship body.

A frame constituting the structure of the insulating box 460 may be made of plywood or a composite material with low outgassing.

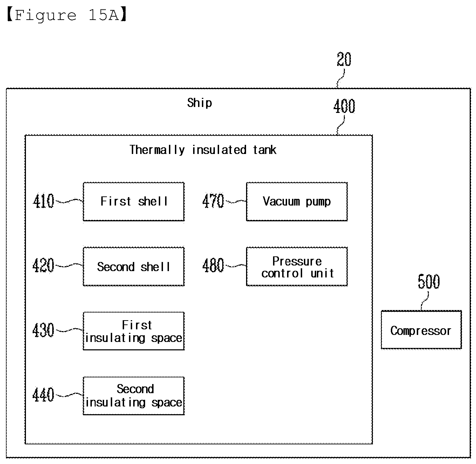

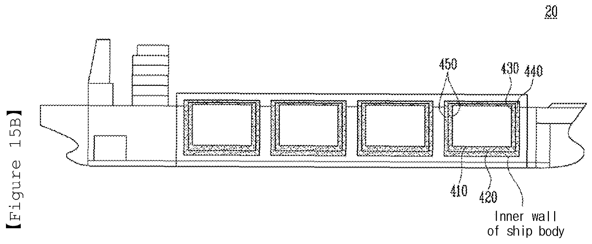

FIGS. 15A and 15B are diagrams illustrating a thermally insulated tank and a ship including the same according to an embodiment of the present disclosure.

As illustrated in FIGS. 15A and 15B, the ship 20 according to the present disclosure may include a thermally insulated tank 400 including a first shell 410, a second shell 420, a first insulating space 430 filled with an insulator 450 disposed between the first shell 410 and the second shell 420, a second insulating space 440 disposed between the second shell 420 and an inner wall of a ship body disposed outside the second shell 420, a vacuum pump 470 for adjusting the vacuum degree of the first insulating space 430 and the second insulating space 440, and a pressure control unit 480 for controlling pressure, and may include a compressor 500.

As described above, the ship 20 according to the present disclosure includes the vacuum pump 470, thereby further facilitating the vacuum operation in the ship 20.

According to the embodiment of the present disclosure, the ship 20 may include a vacuum pipe 476 disposed in the first insulating space 430 and the second insulating space 440.

In one embodiment, the first insulating space 430 and the second insulating space 440 are filled with the insulator 450, and vacuum-treated using only the vacuum pump 470 to form a vacuum in the first insulating space 430 and the second insulating space 440, but according to another embodiment, the ship 20 may further include a vacuum pipe 476.

When the vacuum is formed in the space between the insulators 450 while the first insulating space 430 and the second insulating space 440 are filled with the insulator 450, exhaustion may not be performed smoothly at a location distant from the vacuum pump 470 that forms the vacuum. As the size of the thermally insulated tank 400 increases, it may be difficult to form a vacuum in the first insulating space 430 and the second insulating space 440, and thus, the vacuum pipe 476 may be further included in the first insulating space 430 and the second insulating space 440 in the thermally insulated tank 400, and the vacuum pipe 476 will be described with reference to FIGS. 21 to 24 below.

In addition, as described above, the ship 20 according to the present disclosure is able to operate when the internal pressure of the first shell 410 is at a vacuum pressure of atmospheric pressure or less, and is also able to operate when the pressure drops to atmospheric pressure or less during a process of unloading liquefied gas in the thermally insulated tank 400.

According to the present disclosure, boil-off gas (BOG) generated in the first shell 410 may be transferred to the outside of the thermally insulated tank 400, and may include a compressor 500 used for transferring the boil-off gas (BOG) generated in the thermally insulated tank 400 to the outside of the thermally insulated tank 400, and the boil-off gas (BOG) may be transferred to the outside through the compressor 500 to reduce the internal pressure of the first shell 410 to atmospheric pressure or less.

The suction pressure of the compressor 500 in the present disclosure may be a vacuum, and according to embodiments, a suction pipe of the compressor 500 may be a double pipe to have an advantage of preventing external air from flowing into the compressor 500 even if a leak occurs in the pipe.

Although not illustrated in the drawing, the ship 20 according to the present disclosure may further include a pipe system (not shown) including the compressor 500 having a double pipe.

In addition, the ship 20 of the present disclosure may use boil-off gas (BOG) generated from the thermally insulated tank 400 as fuel and may include an engine, a fuel cell, or a boiler that may be used as fuel.

Hereinafter, a thermally insulated tank 400 according to another embodiment of the present disclosure and a ship 20 including the same will be described.

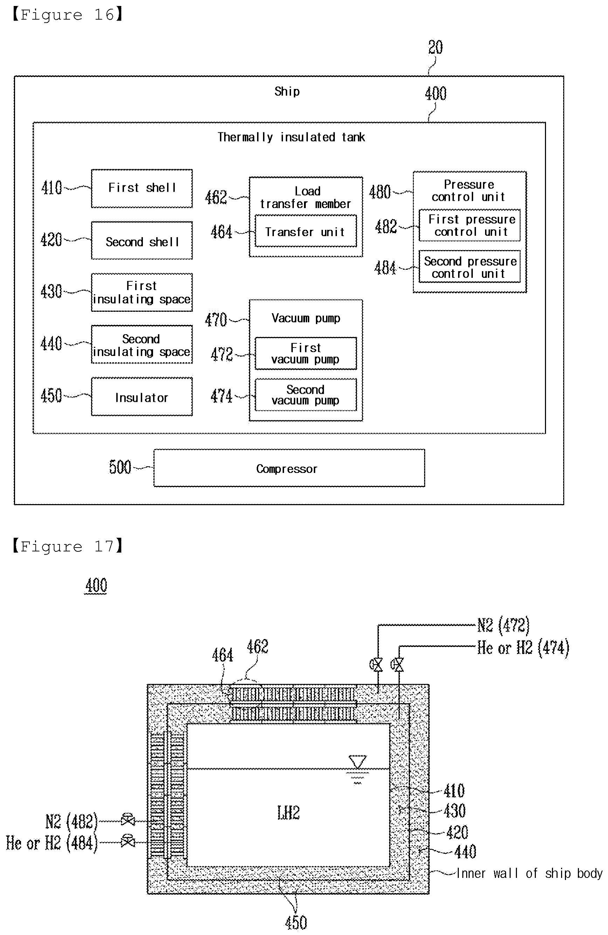

FIG. 16 is a diagram illustrating a thermally insulated tank and a ship including the same according to an embodiment of the present disclosure.

As shown in FIG. 16, a thermally insulated tank 400 according to an embodiment of the present disclosure is a membrane thermally insulated tank 400 for storing liquefied gas, including: a first shell 410 for accommodating liquefied gas therein, a second shell 420 disposed outside the first shell 410, a first insulating space 430 disposed between the first shell 410 and the second shell 420, and a second insulating space 440 disposed between the second shell 420 and an inner wall of a ship body disposed outside the second shell 420, wherein at least one of the first insulating space 430 and the second insulating space 440 is disposed with a load transfer member 462 including a transfer unit 464, and is filled with an insulator 450 and vacuum-treated.

The first insulating space 430 and the second insulating space 440 may be densely filled with the insulator 450, and the insulator 450 in the present disclosure may include one or more of foamed plastic beads, polyurethane, polystyrene, polyethylene, polyisocyanurate, aerogel blankets, fumed silica, calcium silicate, mineral wool, glass wool, glass microfiber, perlite, and hollow glass microspheres.

The first insulating space 430 and the second insulating space 440 filled with the insulator 450 may be in a vacuum state.

In the present disclosure, the first insulating space 430 and the second insulating space 440 are formed in the vacuum state, thereby enhancing thermal insulation performance and reducing generation of boil-off gas from the liquefied gas.

Each configuration of the thermally insulated tank according to the present disclosure and the ship including the same illustrated in FIG. 16 will be described through FIGS. 17 to 20 below.

According to an embodiment of the present disclosure, the vapor pressure in the first shell 410 may be a vacuum state of atmospheric pressure or less. That is, the first shell 410 is operable even when the vapor pressure is in a vacuum state of atmospheric pressure (760 torr) or less, and an alarm may occur when the vapor pressure in the first shell 410 is atmospheric pressure or less, in which a low-pressure alarm value of the first shell 410 may be atmospheric pressure or less.

FIG. 17 is a diagram illustrating a thermally insulated tank according to an embodiment of the present disclosure.

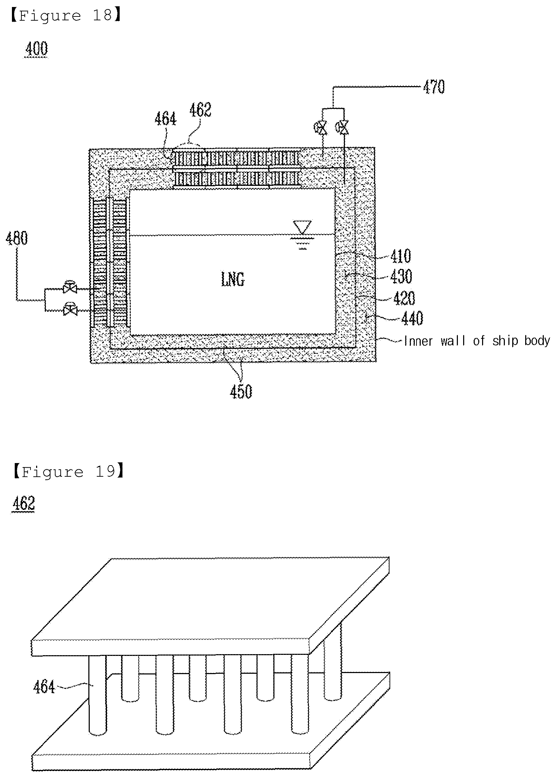

FIG. 18 is a diagram illustrating a thermally insulated tank according to another embodiment of the present disclosure.

As illustrated in FIGS. 17 and 18, the thermally insulated tank 400 according to the embodiment of the present disclosure may include a load transfer member 462 disposed in at least one of the first insulating space 430 and the second insulating space 440.

The insulator 450 filled in the first insulating space 430 and the second insulating space 440 may be filled between the load transfer members 462, and according to embodiments, the load transfer member 462 may be made of a non-metallic material having high thermal insulation performance.

The insulator 450 filled between the load transfer members 462 may be evenly disposed in the first insulating space 430 and the second insulating space 440 by the structure of the load transfer member 462, and simultaneously, the structure of the load transfer members 462 has an effect of distributing and transferring the load transmitted from the thermally insulated tank 400 to the ship body.

In the present disclosure, the load transfer members 462 are disposed in the first insulating space 430 and the second insulating space 440. In the manufacturing process of the thermally insulated tank 400, at least one of the first insulating space 430 and the second insulating space 440 is disposed with the load transfer member 462, and filled with the insulator 450, and then as a subsequent operation, the first insulating space 430 and the second insulating space 440 may be formed in a vacuum state using a vacuum pump 470.

The thermally insulated tank 400 according to the present disclosure may include a vacuum pump 470 and a pressure control unit 480.

As illustrated in FIG. 17, the first insulating space 430 and the second insulating space 440 may be filled with different gases, but as illustrated in FIG. 18, the first insulating space 430 and the second insulating space 440 may also be filled with the same gas.

FIG. 17 illustrates a case in which when the liquefied gas stored in the thermally insulated tank 400 is liquefied hydrogen, the second insulating space 440 is filled with nitrogen gas, and the first insulating space 430 is filled with helium gas or hydrogen gas, but a type of gas filled in each space is not limited to those listed above.

When filled with the different gases, when the liquefied gas accommodated in the first shell 410 is liquefied hydrogen, the first insulating space 430 is filled with hydrogen gas or helium gas having a temperature lower than or equal to a cooling temperature of the liquefied hydrogen, which prevents freezing of residual gas in the first insulating space 430.

In addition, the second insulating space 440 is filled with nitrogen gas which is less expensive than hydrogen or helium gas, as non-flammable gas having a temperature higher than or equal to the cooling temperature of the liquefied hydrogen, which has an advantage of reducing costs.

The thermally insulated tank 400 according to the present disclosure may include a vacuum pump 470 that forms a vacuum in the first insulating space 430 and the second insulating space 440 filled with gas, and may include a pressure control unit 480 that controls the pressure in the first insulating space 430 and the second insulating space 440 by supplying residual gas of the first insulating space 430 and the second insulating space 440 after the vacuum operation.

That is, as illustrated in FIG. 18, the thermally insulated tank 400 according to the present disclosure may include a vacuum pump 470, and the vacuum pump 470 is able to operate even after drying of the thermally insulated tank 400 and the ship 20 to adjust the vacuum degree of the first insulating space 430 and the second insulating space 440 using the vacuum pump 470.

FIG. 17 illustrates a case where the first insulating space 430 and the second insulating space 440 are filled with different gases, and the thermally insulated tank 400 may include a first vacuum pump 472 for forming a vacuum in the first insulating space 430, and a second vacuum pump 474 for forming a vacuum in the second insulating space 440.

In addition, after the vacuum operation, the thermally insulated tank 400 may include a first pressure control unit 482 for controlling the pressure in the first insulating space 430 by supplying the same gas as the residual gas in the first insulating space 430, and a second pressure control unit 484 for controlling the pressure in the second insulating space 440 by supplying the same gas as the residual gas in the second insulating space 440, respectively.

The thermally insulated tank 400 of FIG. 17 is different from that of FIG. 18 which includes one vacuum pump 470 that forms a vacuum in the first insulating space 430 and the second insulating space 440 filled with the same gas, and includes one pressure control unit 480 that controls the pressure in the first insulating space 430 and the second insulating space 440 by supplying the same gas as the residual gas of the first insulating space 430 and the second insulating space 440 after the vacuum operation. As an example, the same residual gas may be nitrogen gas.

The liquefied gas to be stored in the thermally insulated tank 400 of the present disclosure may be liquefied hydrogen as illustrated in FIG. 17, but is not limited thereto, and may include LNG as illustrated in FIG. 18.

FIG. 19 is a diagram illustrating a thermally insulated tank according to another embodiment of the present disclosure.

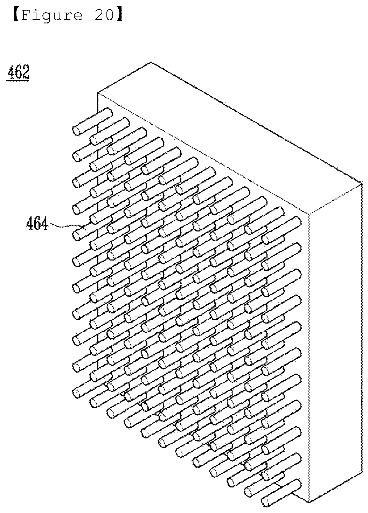

FIG. 20 is a diagram illustrating a thermally insulated tank according to another embodiment of the present disclosure.

FIG. 19 illustrates a load transfer member 462 disposed in the thermally insulated tank, in which the load transfer member 462 may include an upper plate and a lower plate that are disposed to be parallel to the first shell 410 and the second shell 420, and a transfer unit 464 connecting the upper plate and the lower plate to transfer the load of liquefied gas to the inner wall of the ship body.

FIG. 20 illustrates a cross-section of the load transfer member 462, and a plurality of column-shaped transfer units 464 may be disposed, and an insulator is uniformly filled between the plurality of transfer units 464.

As illustrated in FIGS. 19 and 20, the present disclosure uses a load transfer member 462 that connects the upper plate and the lower plate through a column-shaped transfer unit 464, so that the load transferred from the inside of the thermally insulated tank 400 to the ship body is transmitted to the ship body through the upper and lower plates of the load transfer member 462 that contact the respective shells 410 and 420 and the transfer unit 464, and the load is evenly distributed during the process of transferring the load through the load transfer member 462.

Referring to FIG. 16, the ship 20 according to the present disclosure may include a thermally insulated tank 400 including a first shell 410, a second shell 420, a first insulating space 430 filled with an insulator 450 disposed between the first shell 410 and the second shell 420, a second insulating space 440 disposed between the second shell 420 and an inner wall of a ship body disposed outside the second shell 420, a vacuum pump 470 for adjusting the vacuum degree of the first insulating space 430 and the second insulating space 440, and a pressure control unit 480 for controlling pressure, and may include a compressor 500.

As described above, the ship 20 according to the present disclosure includes the vacuum pump 470, thereby further facilitating the vacuum operation in the ship 20.

According to the embodiment of the present disclosure, the ship 20 may include a vacuum pipe 476 disposed in the first insulating space 430 and the second insulating space 440.

In one embodiment, the first insulating space 430 and the second insulating space 440 are filled with the insulator 450, and vacuum-treated using only the vacuum pump 470 to form a vacuum in the first insulating space 430 and the second insulating space 440, but according to another embodiment, the ship 20 may further include a vacuum pipe 476.

In addition, according to another embodiment, the first insulating space 430 and the second insulating space 440 are filled with polyurethane foam as the insulator 450, and vacuum-treated using only the vacuum pump 470 to form a vacuum in the first insulating space 430 and the second insulating space 440, but according to yet another embodiment, the ship 20 may further include a vacuum pipe 476.

When the vacuum is formed in the space between the insulators 450 while the first insulating space 430 and the second insulating space 440 are filled with the insulator 450, exhaustion may not be performed smoothly at a location distant from the vacuum pump 470 that forms the vacuum. As the size of the thermally insulated tank 400 increases, it may be difficult to form a vacuum in the first insulating space 430 and the second insulating space 440, and thus, the vacuum pipe 476 may be further included in the first insulating space 430 and the second insulating space 440 in the thermally insulated tank 400, and the vacuum pipe 476 will be described with reference to FIGS. 21 to 24 below.

In addition, as described above, the ship 20 according to the present disclosure is able to operate when the internal pressure of the first shell 410 is at a vacuum pressure of atmospheric pressure or less, and is also able to operate when the pressure drops to atmospheric pressure or less during a process of unloading liquefied gas in the thermally insulated tank 400.

According to the present disclosure, the boil-off gas (BOG) generated in the first shell 410 may be transferred to the outside of the thermally insulated tank 400, and may include a compressor 500 used for transferring the boil-off gas (BOG) generated in the thermally insulated tank 400 to the outside of the thermally insulated tank 400, and the boil-off gas (BOG) may be transferred to the outside through the compressor 500 to reduce the internal pressure of the first shell 410 to atmospheric pressure or less.

The suction pressure of the compressor 500 in the present disclosure may be a vacuum, and according to embodiments, a suction pipe of the compressor 500 may be a double pipe to have an advantage of preventing external air from flowing into the compressor 500 even if a leak occurs in the pipe.

Although not illustrated in the drawing, the ship 20 according to the present disclosure may further include a pipe system (not shown) including the compressor 500 having a double pipe.

In addition, the ship 20 of the present disclosure may use boil-off gas (BOG) generated from the thermally insulated tank 400 as fuel and may include an engine, a fuel cell, or a boiler capable of being used as fuel.

FIG. 21 is a diagram illustrating a vacuum pipe disposed in a thermally insulated tank according to an embodiment of the present disclosure.

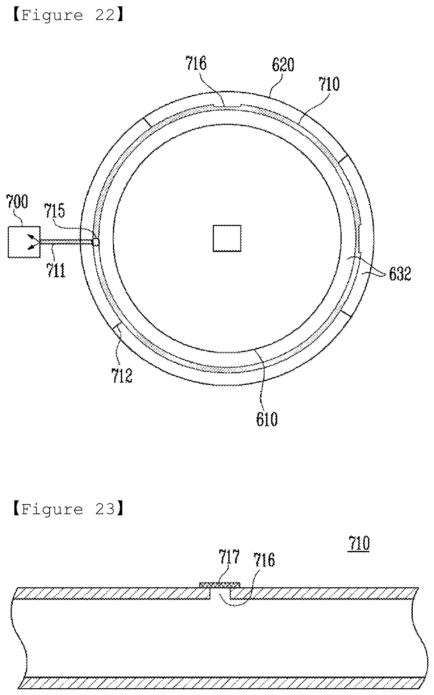

FIG. 22 is a diagram illustrating a vacuum pipe disposed in a thermally insulated tank according to an embodiment of the present disclosure.

FIG. 23 is a diagram illustrating a vacuum pipe disposed in a thermally insulated tank according to an embodiment of the present disclosure.

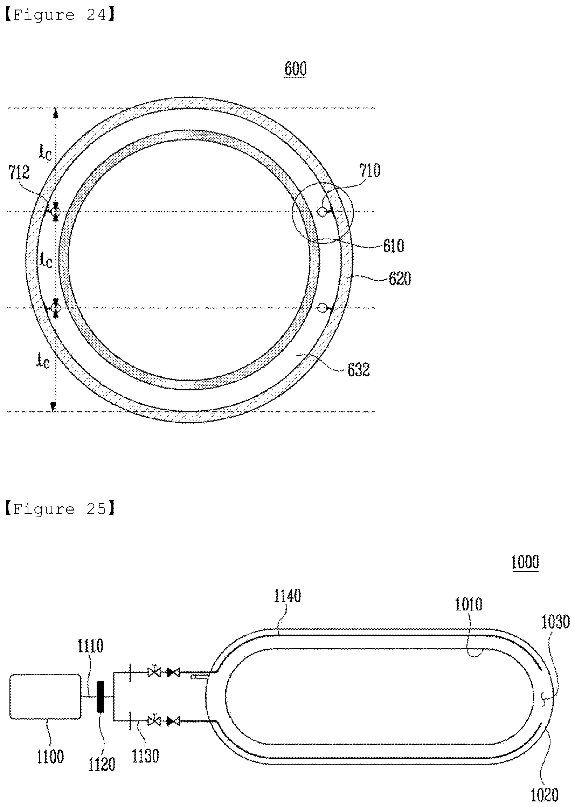

FIG. 24 is a diagram illustrating a vacuum pipe disposed in a thermally insulated tank according to an embodiment of the present disclosure.

In an embodiment of the present disclosure, the thermally insulated tanks 100, 400, and 600 described in FIGS. 1 to 20 may further include vacuum pipes 210, 476, and 710 connected to respective vacuum pumps 200, 470 (471, 472), 700 in vacuum-treated insulating spaces 140, 430, 440, and 630 filled with insulators 42, 450, and 632 between the first shells 120, 410, and 610 and the second shells 130, 420, and 620.

In FIGS. 21 to 24, the vacuum pipe 710 is illustrated, and the illustrated vacuum pipe 710 is an example applied to a thermally insulated tank 600 consisting of a first shell 610 and a second shell 620, and in addition to the illustrated thermally insulated tank 600, the vacuum pipes 210, 476, and 710 may be applied to the respective insulating spaces 140, 430, 440, and 630 of the thermally insulated tanks 100 and 400.

An embodiment applied to the thermally insulated tank 600 will be described below.

As illustrated in FIGS. 21 to 24, the vacuum pipe 710 may be included in the insulating space 630 that is disposed between the first shell 610 and the second shell 620, filled with the insulator 632, and vacuum-treated.

First, the insulating space 630 of the thermally insulated tank 600 may include one or more vacuum pipes 710. The vacuum pipes 710 surround the first shell 610 and may be embedded in the insulator 632 filled in the insulating space 630.

An inlet 716 and a plug 715 may be formed on a side surface of the vacuum pipe 710, and the inlet 716 may be a passage through which gas is suctioned between the insulators 632, and the plug 715 may be connected to a pump pipe 711 and a vacuum pump 700. When the vacuum pump 700 is operated, the gas between the insulators 632 may be suctioned into the vacuum pipe 710 through the inlet 716 and discharged to the outside to form a vacuum state in the insulating space 630.

One or more vacuum pipes 710 may be disposed, and preferably two or more vacuum pipes 710 may be disposed. The vacuum pipes 710 are disposed in the insulating space 630, and a plurality of inlets 716 are formed in the vacuum pipes 710 along a longitudinal direction of the vacuum pipes 710, so that suction may occur at various positions surrounding the vacuum pipes 710.

A central welding line 714 that is mutually welded may be formed at a middle portion of the height of the first shell 610 and the second shell 620. In this case, when the vacuum pipe 710 is fixed to the second shell 620 at the same position as the central welding line 714, structural stability of the thermally insulated tank 600 and fixing force of the vacuum pipes 710 may be degraded, so that the vacuum pipes 710 may be fixed spaced apart from each other so as not to overlap with the central welding line 714.

According to an embodiment, the plug 715 may be formed at a position adjacent to the central welding line 714, and the plug 715 may be formed within about 10 m in a vertical direction from the central welding line 714, and preferably may be formed within 2 m. Accordingly, an operator may easily connect the pump pipe 711 to the plug 715 without using other tools. That is, when the vacuum pipe 710 is disposed in a diagonal direction or vertical direction, the operator may connect the pump pipe 711 to the vacuum pipe 710, thereby improving work efficiency of the operator.

FIG. 22 illustrates a cross-section of the thermally insulated tank 600, and the vacuum pipe 710 may be disposed in the insulating space 630 between the first shell 610 and the second shell 620, and according to embodiments, a plurality of vacuum pipes 710 may be disposed.

The vacuum pipes 710 may be spaced from the first shell 610 and the second shell 620 by equal distances from each other within the insulating space 630, and the spaced distances may be the same as or different from each other.

When the plurality of vacuum pipes 710 are disposed in the insulating space 630, each vacuum pipe may be disposed in the insulating space 630 to be close to the second shell 620 or close to the first shell 610.

The vacuum pipe 710 may be provided with an inlet 716 and may be fixed to the second shell 620 by a connection unit 712. The vacuum pipe 710 is provided with a plug 715, and is connected to the pump pipe 711 through the plug 715, and gas in the insulating space 630 may be suctioned through the inlet 716.

FIG. 23 illustrates a cross-sectional view of the vacuum pipe 710, and the vacuum pipe 710 may include an inlet 716 formed on a side surface (width direction) and a filter unit 717 covering the inlet 716.

The vacuum pipe 710 is connected to the pump pipe 711 through the plug 715, and when the vacuum pump 700 is operated, gases in the insulating space 630 may be suctioned to the vacuum pipe 710 through the inlet 716 and discharged to the outside.

In this case, since the insulating space 630 is filled with the insulator 632 such as powder, when the vacuum pump 700 is operated, the insulator 632 may be suctioned into the inlet 716 and the insulator 632 may be transferred to the vacuum pump 700 along the vacuum pipe 710. Thus, to prevent the insulator 632 from flowing into the vacuum pump 700 through the inlet 716, the inlet 716 may be covered with the filter unit 717.

The filter unit 717 has a porous structure such as a mesh, and according to embodiments, the filter units 717 may be arranged in multiple layers to enhance the filtering effect of the insulator 632. For example, the filter unit 717 may be in the form of multiple layers stacked with metal meshes or filters made of a pulp material.

Holes formed in the filter unit 717 itself, or holes formed when the filter units 717 are stacked in multiple layers, may have a diameter smaller than the particle diameter of the insulator 632 to prevent the insulator 632 from flowing into the inlet 716. The filter unit 717 may be formed of various materials other than the aforementioned material and may be manufactured in various sizes or shapes, but the present disclosure is not limited thereto.

The filter unit 717 may also cover only a region where the inlet 716 is formed, or also cover the region where the inlet 716 is formed while surrounding the entire vacuum pipe 710. However, the present disclosure is not limited thereto.

As illustrated in FIG. 24, according to an embodiment of the present disclosure, the vacuum pipe 710 may be disposed to be fixed to the second shell 620 by the connection unit 712.

As the connection unit 712 is provided in the insulating space 630, the connection unit 712 may receive cold heat from the first shell 610 so that a temperature may drop, and thus, the connection unit 712 may be formed of wood, SUS, polytetrafluoroethylene (PTFE), or bakelite as a material that may withstand a low temperature.

However, when the connection unit 712 is installed on the central welding line 714 of the second shell 620, the structural stability of the thermally insulated tank 600 and the fixing force of the vacuum pipe 710 may be reduced, so that the vacuum pipe 710 is preferably installed spaced apart from each other so as not to overlap with the central welding line 714.

FIG. 25 is a diagram illustrating a thermally insulated tank according to another embodiment of the present disclosure.

Referring to FIG. 25, the thermally insulated tank 600 according to another embodiment of the present disclosure is an independent thermally insulated tank for storing liquefied gas, including a first shell 1010 for accommodating liquefied gas therein, a second shell 1020 disposed outside the first shell 1010, and an insulating space 1030 disposed between the first shell 1010 and the second shell 1020, in which the insulating space 1030 is a space filled with an insulator and vacuum-treated.

For example, the insulator in the present disclosure may be powder or beads.

In another example, the insulator in the present disclosure may include, for example, one or more of foamed plastic beads, polyurethane, polystyrene, polyethylene, polyisocyanurate, aerogel blankets, fumed silica, calcium silicate, mineral wool, glass wool, glass microfiber, perlite, and hollow glass microspheres. The hollow glass microspheres may include glass bubbles, which are a trade name manufactured by 3M company. Hereinafter, the glass bubbles have been described as the insulator, which is for illustrative purpose, and the present disclosure is not limited by a type of insulator.

Meanwhile, a vacuum pump 1100 may be provided outside the thermally insulated tank 1000 to discharge gas from the insulating space 1030. Hereinafter, forming a vacuum means discharging gas by the vacuum pump 1100 to reduce pressure. The vacuum degree may indicate the degree of discharging gas in a predetermined space, and increasing the vacuum degree may indicate discharging gas from a predetermined space to reduce pressure.

The vacuum pump 1100 may be provided on a ship, and the vacuum pump 1100 may make a low vacuum in the insulating space 1030. The vacuum pump 1100 may be a low vacuum pump. In this case, the vacuum pump 1100 may have a capacity of 5 $m^3$/hr or more, and preferably, a capacity of 10 $m^3$/hr or more. In this case, the vacuum pump 1100 may reduce the pressure in the insulating space 1030 to 100 mTorr or less, and preferably, reduce the pressure in the insulating space 1030 to 10 mTorr or less, and preferably, reduce the pressure in the insulating space 1030 to 1 mTorr or less.

In this case, the thermally insulated tank 1000 may generate less boil-off gas in the first shell 1010 than the amount of boil-off gas required by a demand destination (not shown) that uses the boil-off gas. The insulation performance of the thermally insulated tank 1000 may be determined by the vacuum degree of the insulating space 1030, and the vacuum degree of the insulating space 1030 may be at least low vacuum.

For example, the pressure in the insulating space 1030 may be 70 mTorr or higher. More preferably, the pressure in the insulating space 1030 may be 100 mTorr, and the pressure in the insulating space 1030 may be 300 mTorr or higher. The higher the pressure in the insulating space 1030 is set, the less labor or time may be required to form a vacuum state in the insulating space 1030.

The vacuum pipe 1140 may be connected to the vacuum pump 1100 provided outside the thermally insulated tank 1000, and specifically, a manifold 1030 may be provided between the vacuum pump 1100 and the thermally insulated tank 1000, and a pump pipe 1110 connecting the vacuum pump 1100 and the manifold 1030, and a manifold pipe 1130 connecting the manifold 1030 and the vacuum pipe 1140 may be provided. At least one of the pump pipe 1110 and the manifold pipe 1130 may be provided with a valve (not shown), and the valve (not shown) may control the flow of gas in the insulating space 1030.

The vacuum pipe 1140 surrounds the first shell 1010 and may be embedded in the insulator filled in the insulating space 1030.

The vacuum pipe 1140 may be disposed closer to the first shell 1010 than to the second shell 1020. As described below, a Knudsen number Kn of gas molecules in the insulating space 1030 may decrease as the pressure in the insulating space 1030 becomes lower, and the smaller the Knudsen number Kn, the easier it is to control the flow of gas molecules in the insulating space 1030. Accordingly, the vacuum pipe 1140 is disposed at a position close to the first shell 1010 having a relatively low temperature to easily discharge gas molecules to the outside along the vacuum pipe 1140 by the vacuum pipe 1140 and rapidly hold the vacuum of the insulating space 1030.

A plurality of vacuum pipes 1140 may be provided and disposed at the upper and lower portions of the insulating space 1030, respectively, and one vacuum pipe 1140 may be formed in a structure surrounding the first shell 1010.

The vacuum pipe 1140 may be fixed to the first shell 1010 or the second shell 1020 by a support (not shown). The support (not shown) is fixed to the first shell 1010, and a distance between the vacuum pipe 1140 disposed close to the first shell 1010 and the support (not shown) is decreased, thereby reducing the length of the support (not shown). The vacuum pipe 1140 may include an inlet (not shown) formed on a side surface (width direction) and a filter unit (not shown) covering the inlet (not shown). The vacuum pipe 1140 may have one end connected to the manifold pipe 1130 and the other end inserted into the insulating space 1030, and at this time, the inlet (not shown) may be provided at the other end.

The vacuum pipe 1140 is connected to the pump pipe 1110, and when the vacuum pump 1100 is operated, gases in the insulating space 1030 may be suctioned to the vacuum pipe 1140 through the inlet (not shown) formed in the vacuum pipe 1140 and discharged to the outside.

In this case, since the insulating space 1030 is filled with an insulator such as powder, when the vacuum pump 1100 is operated, the insulator may be suctioned into the inlet (not shown) and the insulator may be transferred to the vacuum pump 1100 along the vacuum pipe 1140. Thus, to prevent the insulator from flowing into the vacuum pump 1100 through the inlet (not shown), the inlet (not shown) may be covered with the filter unit (not shown).

The filter unit (not shown) has a porous structure such as a mesh, and according to embodiments, the filter units may be disposed in multiple layers to enhance the filtering effect of the insulator. For example, the filter unit (not shown) may be in the form of multiple layers of metal meshes or filters made of a pulp material.

Holes formed in the filter unit (not shown) itself, or holes formed when the filter units (not shown) are stacked in multiple layers, may have a diameter smaller than the particle diameter of the insulator to prevent the insulator from flowing into the inlet (not shown). The filter unit (not shown) may be formed of various materials in addition to the materials and may be prepared in various sizes or shapes, but the present disclosure is not limited thereto.

The filter unit (not shown) may also cover only a region where the inlet (not shown) is formed, or also cover the region where the inlet (not shown) is formed while surrounding the entire vacuum pipe 1140. However, the present disclosure is not limited thereto.

In the thermally insulated tank 1000 according to another embodiment of the present disclosure, the insulating space 1030 is filled with an insulator and a vacuum pipe 1140 is provided therein, thereby forming a vacuum even in the insulating space 1030 that is distant from the vacuum pump 1100.

Meanwhile, in the case of conventional storage tanks for storing liquefied hydrogen, if the storage tanks do not have sufficient thermal insulation performance, a large amount of boil-off gas is generated to form a high vacuum in the insulating space. However, it takes a lot of time to form the high vacuum in the insulating space.

Therefore, the present disclosure can reduce the time and labor required to form a vacuum in the insulating space 1030 by forming the low vacuum in the insulating space 1030. Specifically, the present disclosure can identify the pressure range in which the vacuum may be easily held through the Knudsen number Kn. The Knudsen number will be described in detail below.

When the low vacuum is formed in the insulating space 1030, the Knudsen number may be considered. The Knudsen number is a dimensionless number that indicates the characteristics of flow, and may be expressed as a ratio of a mean free path $\lambda$, which is an average distance that fluid molecules move while continuously colliding, to a characteristic length, which is a representative length characterizing the flow, as shown in Equation below. In this case, when the fluid molecules pass between the insulators, the characteristic length may be an average pore size $\delta_p$ of the insulator.

$$Kn = \frac{\text{mean free path of the gas molecules}}{\text{average pore size}} = \frac{\lambda}{\delta_p} = \frac{k_b T}{\sqrt{2}\pi d_g^2 p \delta_p}$$

$K_b$ represents Boltzmann's constant ($1.38 \times 10^{-23}$ J/K), T represents an absolute temperature, $d_g$ represents a diameter of the fluid molecule, p represents an absolute pressure, $\delta_p = \left[\frac{0.905}{(1-\psi)^{\frac{1}{3}}} - 1\right] d_p$ , $d_p$ represents a diameter of the insulator, and $\psi$ represents the porosity of the insulator.

The gas molecules contained in the insulating space 1030 may exchange kinetic energy with neighboring gas molecules and move to the vacuum pump 1100 when the pressure in the insulating space 1030 is not low.

However, as the Knudsen number increases, it is meant that the gas molecules have less interaction with each other, thereby making it difficult to control the movement of the gas molecules and making it difficult for the vacuum pump 1100 to form a vacuum in the insulating space 1030.

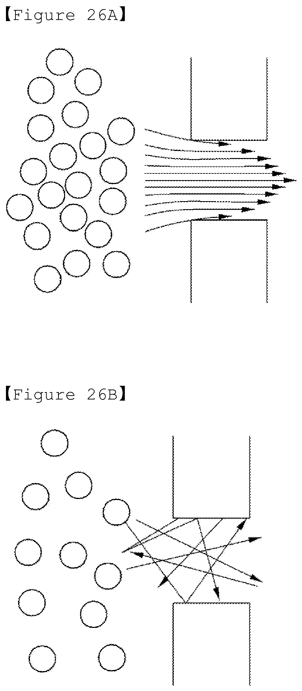

FIG. 26A is a diagram for describing a flow of gas molecules as a viscous flow, and FIG. 26B is a diagram for describing a flow of gas molecules as a molecular flow.

The gas molecules may be classified into a viscous flow, a slip flow, a transition flow, or a molecular flow depending on a value of the Knudsen number, wherein as the Knudsen number increases, the flow of gas molecules may change from the viscous flow to the molecular flow.

In the viscous flow, since the momentum and energy transfer between molecules occur continuously, the flow of gas molecules may be controlled by a pump, whereas the molecular flow is a flow of gas molecules in a rare state of the gas molecules where intermolecular collisions may be neglected, and it is difficult to control the flow of gas molecules by a pump.

Referring to FIG. 26A, when the gas molecules flow as the viscous flow, the directionality is strong, so that it is easy for the pump to control the gas molecules to pass between pores of the insulator. Referring to FIG. 26B, when the gas molecules flow as the molecular flow, the directionality is weak, so that it is difficult for the pump to control the gas molecules to pass between the pores of the insulator.

When the Knudsen number is 0.01 or less, the gas molecules may flow as the viscous flow, and when the Knudsen number exceeds 0.01 and 0.1 or less, the gas molecules may flow as the slip flow, when the Knudsen number exceeds 0.1 and 10 or less, the gas molecules may flow as the transition flow, and when the Knudsen number exceeds 10, the gas molecules may flow as the molecular flow.

In the case of the molecular flow having the Knudsen number exceeding 10, it is difficult to control the flow of gas molecules, and thus in the case of the insulating space 1030 of the thermally insulated tank 1000 according to an embodiment of the present disclosure, it is preferable to reduce the pressure until the Knudsen number becomes 10 or less, that is, it is preferable that the pressure in the insulating space 1030 is greater than the pressure at which the Knudsen number becomes 10.

Furthermore, when the vacuum is held in the insulating space 1030, the flow of the gas molecules is preferably at least one of the viscous flow, the slip flow, and the transition flow.

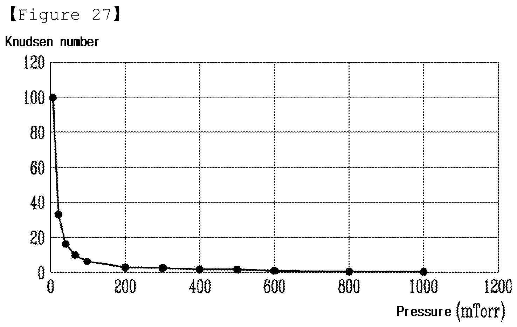

FIG. 27 is a graph showing a relationship between the Knudsen number and pressure. At this time, a diameter of the insulator filled in the insulating space 1030 is 1,000 $\mu$m, the porosity of the insulator is 0.5, the temperature is 273 K, and the diameter of the gas molecules is 3.63 pm. In this specification, the diameter of the insulator is an average value of the overall diameter of the insulator filled in the insulating space 1030.

Referring to FIG. 27, the Knudsen number may increase as pressure decreases. Accordingly, in the process of forming the vacuum in the insulating space 1030 according to an embodiment of the present disclosure, when the insulating space 1030 reaches a predetermined pressure or less, the flow of gas molecules may become a molecular flow. At this time, since it is difficult to control the flow of the molecular flow, it may be difficult to form the vacuum in the insulating space 1030 using the vacuum pump 1100.

Referring to FIG. 27, for example, when the diameter of the insulator is 1,000 $\mu$m and the pressure in the insulating space 1030 is 66 mTorr or less, the Knudsen number may be greater than 10, and in this case, the gas molecules in the insulator may become a molecular flow.

As such, the thermally insulated tank 1000 according to an embodiment of the present disclosure may control the Knudsen number depending on a diameter of the insulator filled in the insulating space 1030 and a pressure in the insulating space 1030.

In order to control the Knudsen number, the diameter of the insulator may be adjusted by filtering the insulator through a sieve, and the size of the mesh of the sieve may be determined according to the diameter of the insulator, in which the diameter of the insulator may be 10 to 3,000 $\mu$m.

Since it is preferable to reduce the pressure in the insulating space 1030 within a range where the flow of the gas molecules does not become the molecular flow, according to FIG. 27, when the diameter of the insulator is 1,000 $\mu$m, it is preferable to form the vacuum until the pressure in the insulating space 1030 is 66 mTorr.

Meanwhile, glass bubbles (GB) may be supplied to the insulating space 1030 as the insulator, and Table 1 below shows a pressure (KN10) at which the Knudsen number becomes 10 and a pressure (KN100) at which the Knudsen number becomes 100, based on the size of the glass bubbles. The temperature when holding the vacuum is 30°C, and the size of the glass bubbles may be 10 to 3,000 $\mu$m.

Since it is preferable to reduce the pressure in the insulating space 1030 within a range where the flow of gas molecules does not become the molecular flow, it is preferable to reduce the pressure in the insulating space 1030 to at least KN10 in accordance with Table 1 below. That is, the pressure in the insulating space 1030 is preferably greater than KN10 of Table 1.

For example, when the diameter of the insulator is 65 $\mu$m, it is preferable to form a vacuum until the pressure in the insulating space 1030 becomes about 1125.9 mTorr. However, since the Knudsen number may vary depending on a diameter of the insulator, the pressure at which the Knudsen number becomes a predetermined value may vary depending on a diameter of the insulator. For example, the pressure (KN10) at which the Knudsen number becomes 10 may be 1125.9 mTorr when the diameter of the insulator is 65 $\mu$m.

According to Table 1, when the diameter of the insulator is large, the Knudsen number may be 10 or greater even at a relatively low pressure, and accordingly, the pressure in the insulating space 1030 may be rapidly reduced to the relatively low pressure.

[Table 1]

| Size of glass bubble ($\mu$m) | KN10 (mTorr) | KN100(mTorr) |
|---|---|---|
| 10 | 7318.3 | 731.8 |
| 30 | 2439.4 | 243.9 |
| 65 | 1125.9 | 112.6 |
| 115 | 636.4 | 63.6 |

(continued)

| Size of glass bubble (μm) | KN10 (mTorr) | KN100(mTorr) |
|---|---|---|
| 177 | 413.5 | 41.3 |
| 300 | 243.9 | 24.4 |
| 420 | 174.2 | 17.4 |
| 1000 | 73.2 | 7.3 |

Meanwhile, the vacuum time required to form the vacuum in the insulating space 1030 may vary depending on the Knudsen number.

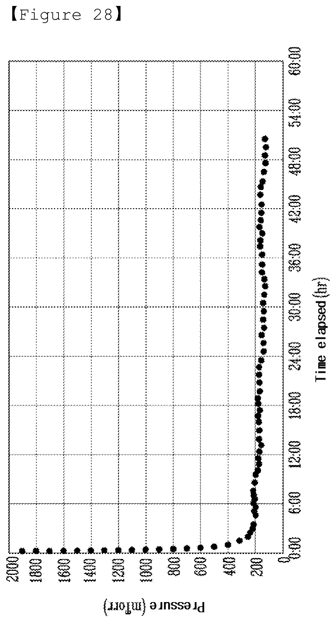

FIG. 28 is a graph showing experimental results of a relationship between a pressure and a vacuum time of the insulating space.

Table 2 and FIG. 28 below show results of measuring the pressure and vacuum time of the insulating space 1030 in a Lab scale. Here, the diameter of the insulator may be 65 μm.

When the pressure in the insulating space 1030 reaches a predetermined pressure, it is difficult for the pressure to fall to the predetermined pressure or less. For example, referring to Table 2 and FIG. 28, a rate at which the pressure in the insulating space 1030 decreases is reduced from about 120 mTorr, and it takes a lot of time to make the pressure in the insulating space 1030 smaller than 120 mTorr.

[Table 2]

| Time elapsed (hour:min) | Pressure (mTorr) | Time elapsed (hour:min) | Pressure (mTorr) |
|---|---|---|---|
| 0:00 | - | 1:59 | 253 |
| 0:14 | 1901 | 2:29 | 238 |
| 0:14 | 1800 | 2:59 | 219 |
| 0:15 | 1700 | 3:28 | 212 |
| 0:16 | 1600 | 4:36 | 198 |
| 0:17 | 1500 | 5:04 | 208 |
| 0:18 | 1400 | 5:34 | 198 |
| 0:19 | 1300 | 6:04 | 213 |
| 0:21 | 1200 | 6:34 | 205 |
| 0:22 | 1100 | 7:04 | 211 |
| 0:24 | 1000 | 7:34 | 215 |
| 0:26 | 900 | 8:34 | 204 |
| 0:29 | 800 | 9:34 | 197 |
| 0:33 | 700 | 10:04 | 181 |
| 0:38 | 600 | 24:35 | 138 |
| 0:46 | 500 | 31:29 | 134 |
| 1:00 | 400 | 32:32 | 128 |
| 1:30 | 316 | 47:32 | 125 |

Meanwhile, by comparing a graph shape of the pressure in the insulating space 1030 and elapsed time in the graph FIG. 28 with a graph shape of the Knudsen number and the pressure in the insulating space 1030 in FIG. 27, it is confirmed that as the Knudsen number increases, the time required to form the vacuum in the insulating space 1030 may increase.

Referring to Table 2 above, as an example, the pressure in the insulating space 1030 may be formed within 24 hours, and preferably within 12 hours. At this time, the pressure in the insulating space 1030 may be 70 mTorr or higher, and more preferably 300 mTorr or higher. The higher the pressure in the insulating space 1030 is set, the less labor or time may be required to form a vacuum state in the insulating space 1030.

**EP 4 722 096 A1**

Therefore, the present disclosure can reduce the pressure in the insulating space 1030 to a predetermined pressure at which the pressure may be easily reduced, and at this time, the Knudsen number of the flow of gas molecules in the insulating space 1030 may be 10 or less, and the flow of the gas molecules in the insulating space 1030 may be at least one of a viscous flow, a slip flow, and a transition flow.

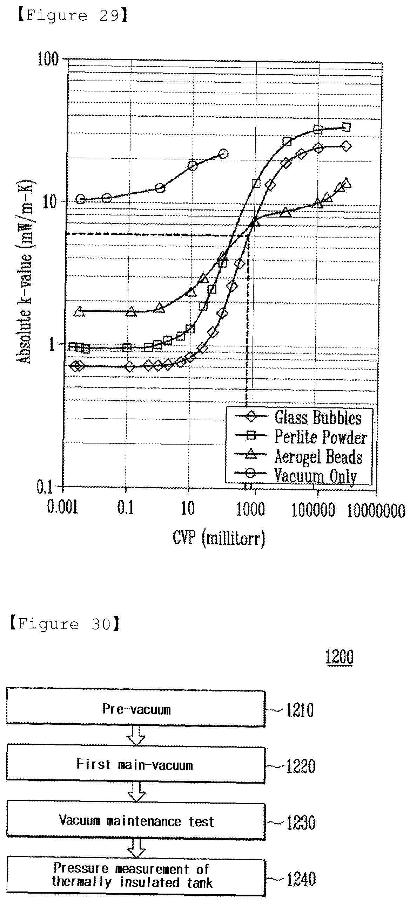

FIG. 29 is a graph illustrating a relationship between the pressure in the insulating space and thermal conductivity.

FIG. 29 shows a graph of thermal conductivity (Absolute k-value) and cold vacuum pressure (CVP), when insulators such as Glass Bubbles, Perlite Powder, and Aerogel Beads are filled in the insulating space 1030 to hold the vacuum, and when the insulators are not filled in the insulating space 1030 to hold the vacuum. The temperature of the insulating space 1030 may be -253°C to 0°C.

Referring to FIG. 29, the lower the pressure in the insulating space 1030, the smaller the thermal conductivity (k). It means that the lower the pressure in the insulating space 1030, the less heat is transferred into the thermally insulated tank 1000.

Meanwhile, liquefied hydrogen may be stored in the thermally insulated tank 1000 according to an embodiment of the present disclosure. Specifically, the liquefied hydrogen may be stored in the first shell 1010 of the thermally insulated tank 1000.

Heat outside the thermally insulated tank 1000 may pass through the second shell 1020, the insulating space 1030 and the first shell 1010 to be transferred to the liquefied hydrogen. At this time, the liquefied hydrogen may be vaporized by the external heat to generate boil-off gas in the first shell 1010.

In order to increase the insulation performance of the thermally insulated tank 1000, the insulating space 1030 may be filled with the insulator, and the insulating space 1030 may be formed in the vacuum state. Here, the vacuum may mean a pressure lower than the external pressure of the thermally insulated tank 1000.

Referring to FIGS. 27 and 28, when the Knudsen number is 10 or less, the pressure in the insulating space 1030 may be rapidly reduced. Therefore, it is preferable to reduce the pressure in the insulating space 1030 in the range where the Knudsen number is 10 or less.

In addition, referring to FIG. 28, the pressure in the insulating space 1030 tends to no longer decrease after 24 hours have passed since the vacuum in the insulating space 1030 is held. Therefore, the pressure in the insulating space 1030 may be formed before 24 hours have elapsed, even if the vacuum holding time in the insulating space 1030 is extended.

On the other hand, referring to FIG. 29, it is preferable to reduce the pressure in the insulating space 1030 to enhance the thermal insulation performance of the thermally insulated tank 1000.

That is, referring to FIGS. 27 to 29, it is preferable to reduce the pressure in the insulating space 1030 in the range where the Knudsen number is 10 or less in terms of the vacuum holding time, and it is preferable to reduce the pressure in the insulating space 1030 as much as possible in terms of the thermal insulation performance of the thermally insulated tank 1000. However, the pressure in the insulating space 1030 may be reduced to a pressure where the Knudsen number becomes 10 or more, and in the present disclosure, the pressure in the insulating space 1030 is not limited to the range where the Knudsen number is 10 or more.

However, the thermal insulation performance of the thermally insulated tank 1000 is intended to reduce the amount of boil-off gas generated in the thermally insulated tank 1000 and prevent waste of liquefied hydrogen. Thus, if all of the boil-off gas generated in the thermally insulated tank 1000 may be used as fuel, within the pressure range where usable boil-off gas is generated, the pressure in the insulating space 1030 may be increased to rather reduce the thermal insulation performance of the thermally insulated tank 1000 while reducing the time required to hold the vacuum in the insulating space 1030.

That is, the present disclosure may reduce the time required to form the vacuum in the insulating space 1030 while achieving the target thermal insulation performance of the thermally insulated tank 1000 by considering both the thermal insulation performance of the thermally insulated tank 1000 and the time required to form the vacuum in the insulating space 1030.

In the thermally insulated tank 1000 according to an embodiment of the present disclosure, the insulating space 1030 has a pressure of 300 mTorr or more, and at this time, the hydrogen boil-off gas generated daily in the thermally insulated tank 1000 may all be used as propulsion fuel for the ship. As one example, there is all of the boil-off gas generated in the thermally insulated tank 1000 is used as the propulsion fuel, and the boil-off gas may be used at boil-off gas demand destinations, such as boilers, power generation equipment, etc., in addition to the propulsion fuel. However, the present disclosure is not limited to the boil-off gas demand destinations.

As an example, referring to FIG. 29, when the pressure in the insulating space 1030 filled with glass bubbles is 600 to 700 mTorr, the thermal conductivity (k) value may be 6 mW/mK.

At this time, the liquefied hydrogen stored in the thermally insulated tank 1000 evaporates at about 0.11% per day, which corresponds to about 300 kg/hr (7.2 ton/day).

The thermally insulated tank 1000 is provided on a ship that uses liquefied hydrogen as propulsion fuel, and since

19

the ship uses 1.5 tons of hydrogen as fuel per day, the hydrogen boil-off gas generated daily in the thermally insulated tank 1000 may all be used as propulsion fuel for the ship.

The thermally insulated tank 1000 of the present disclosure includes an insulating space 1030 in a low vacuum state with a pressure of 70 mTorr to 2,400 mTorr, preferably an insulating space 1030 with a pressure of 100 mTorr to 1,000 mTorr, and more preferably an insulating space 1030 in a low vacuum state of 300 mTorr to 700 mTorr. At this time, the boil-off gas generated from the thermally insulated tank 1000 may all be used as fuel for propulsion fuel.

Therefore, the pressure in the insulating space 1030 may be determined by considering the total amount of boil-off gas required from various demand destinations other than propulsion fuel. That is, as the amount of required boil-off gas increases, the thermal insulation performance of the thermally insulated tank 1000 may be reduced, so that the pressure in the insulating space 1030 may increase and the vacuum degree may decrease.

Glass bubbles (GB) may be supplied to the insulating space 1030 as the insulator, and Table 3 below shows a pressure (KN10) at which the Knudsen number becomes 10 and a pressure (KN100) at which the Knudsen number becomes 100, based on the size of the glass bubbles. The temperature for holding the vacuum may be about -0°C or less in a low-temperature region. The size of the glass bubbles may be 10 to 3,000 μm.

Since it is preferable to reduce the pressure in the insulating space 1030 within a range where the flow of gas molecules does not become the molecular flow, it is preferable to reduce the pressure in the insulating space 1030 to at least KN10 in the low-temperature region in accordance with Table 3 below. That is, the pressure in the insulating space 1030 is preferably greater than KN10 of Table 3.

For example, when the diameter of the insulator is 65 μm, it is preferable to form a vacuum until the pressure in the insulating space 1030 reaches 580.39 mTorr at -116.5°C, which is an intermediate temperature between the external temperature of the thermally insulated tank 1000 and the internal temperature of the thermally insulated tank 1000, and it is preferable to form a vacuum until the pressure in the insulating space 1030 reaches about 74.32 mTorr at - 253°C, which is a temperature at which liquefied hydrogen is stored. However, the Knudsen number may vary depending on a diameter of the insulator, and a target vacuum degree value of the insulating space 1030 may vary depending on a diameter of the insulator.

In addition, the Knudsen number and the temperature have a proportional relationship, and the Knudsen number may decrease as the temperature decreases. As the temperature of the insulating space 1030 decreases, the Knudsen number becomes smaller, so that the gas molecules in the insulating space 1030 may not become a molecular flow up to a relatively low pressure and may remain as at least one of a viscous flow, a slip flow, and a transition flow. This may mean that the insulating space 1030 may be formed in a high vacuum degree for a short time in the low-temperature region. That is, while it was difficult to reduce the pressure at 20°C, the pressure may be rapidly reduced at -253°C.

Therefore, at Cold Vacuum Pressure (CVP), the pressure in the insulating space 1030 may be reduced until having a larger Knudsen number than Warm Vacuum Pressure (WVP).

[Table 3]

| Size of glass bubble (μm) | KN10 (mTorr) | | | KN100 (mTorr) | | |
|---|---|---|---|---|---|---|
| | -253°C | -116.5°C | 20°C | -253°C | -116.5°C | 20°C |
| 10 | 483.06 | 3772.45 | 7076.8 | 48.31 | 377.25 | 707.7 |
| 30 | 161.02 | 1257.50 | 2358.9 | 16.10 | 125.75 | 235.9 |
| 65 | 74.32 | 580.39 | 1088.7 | 7.43 | 58.04 | 108.9 |
| 115 | 42.00 | 328.05 | 615.4 | 4.20 | 32.80 | 61.5 |
| 177 | 27.29 | 213.14 | 399.8 | 2.73 | 21.31 | 40.0 |
| 300 | 16.10 | 125.75 | 235.9 | 1.61 | 12.58 | 23.6 |
| 420 | 11.50 | 89.82 | 168.5 | 1.15 | 8.98 | 16.8 |
| 1000 | 4.83 | 37.73 | 70.8 | 0.48 | 3.77 | 7.1 |

Hereinafter, a method for forming a vacuum in the insulating space according to an embodiment of the present disclosure will be described.

FIG. 30 is a flowchart of a first vacuum step of a method for forming a vacuum in the insulating space according to an embodiment of the present disclosure.

The method for forming the vacuum in the insulating space 1030 according to an embodiment of the present disclosure includes a first vacuum step (1200) and a second vacuum step (1300).

The first vacuum step (1200) may be performed before loading liquefied hydrogen into the thermally insulated tank 1000, and the second vacuum step (1300) may be performed after loading the liquefied hydrogen into the thermally insulated tank 1000. Referring to FIG. 25, the liquefied hydrogen may be loaded into the first shell 1010 that accommodates liquefied gas in the thermally insulated tank 1000. The second shell 1020 is disposed outside the first shell 1010, and the insulating space 1030 may be disposed between the first shell 1010 and the second shell 1020.

Specifically, the first vacuum step (1200) may be performed by a vacuum pump provided on land, and the second vacuum step (1300) may be performed after loading the liquefied hydrogen into the thermally insulated tank 1000 and then the ship equipped with the thermally insulated tank 1000 starts to operate.

Accordingly, the method for forming the vacuum in the insulating space 1030 according to an embodiment of the present disclosure may adjust the vacuum degree of the insulating space 1030 during ship operation, so that there is no need to greatly reduce the vacuum degree of the insulating space 1030 in preparation for changes in the vacuum degree of the insulating space 1030 during ship operation, thereby greatly reducing the time required to hold the vacuum in the insulating space 1030 before ship operation.

In particular, the insulating space 1030 according to one embodiment of the present disclosure has a relatively high pressure value in a low vacuum state, so that it is possible to adjust the vacuum degree of the insulating space 1030 even during operation of the ship.

In addition, during operation of the ship, moisture or gas may be discharged from the insulator of the insulating space 1030 or the thermally insulated tank 1000 itself, so that the vacuum degree in the insulating space 1030 may change. At this time, the vacuum pump 1100 in the ship may discharge moisture and the like from the insulating space 1030 to the outside, thereby maintaining the vacuum degree in the insulating space 1030.

Referring to FIG. 30, the first vacuum step (1200) may include a pre-vacuum step (1210), a first main-vacuum step (1220), a vacuum maintenance test step (1230), and a pressure measurement step (1240) of the thermally insulated tank.

The pre-vacuum step (1210) may be performed before the insulating space 1030 is filled with the insulator. In the pre-vacuum step (1210), gas in the insulating space 1030 is discharged to the outside using the vacuum pump 1100, thereby reducing the pressure in the insulating space 1030 to a predetermined value or lower. In the pre-vacuum step (1210), the pressure in the insulating space 1030 may be reduced to 1,000 mTorr or less, preferably 700 mTorr or less, preferably 500 mTorr or less, and preferably 300 mTorr or less.

Thereafter, the pressure in the insulating space 1030 is measured for a predetermined time to observe pressure changes in the insulating space 1030.

At this time, if the pressure in the insulating space 1030 increases, moisture, gas, or the like may be discharged from the first shell 1010 or the second shell 1020 of the thermally insulated tank 1000 itself.

On the other hand, when the pressure in the insulating space 1030 decreases, gas may be leaked from the first shell 1010 or the second shell 1020.

In the pre-vacuum step (1210), a process of observing pressure changes after reducing the pressure in the insulating space 1030 may be repeated multiple times. As such, while the process of observing pressure changes after reducing the pressure in the insulating space 1030 is repeated, when the increased level of the pressure in the insulating space 1030 is a predetermined value or lower, the first main-vacuum step (1220) may be performed.

In the pre-vacuum step (1210), while the pressure in the insulating space 1030 is reduced to the predetermined value or lower, moisture and gas contained in the thermally insulated tank 1000 itself may be discharged to the outside.

Whether there is leakage in the thermally insulated tank 1000 may be determined by reducing the pressure in the insulating space 1030 to the predetermined value lower. Specifically, whether there is leakage may be determined by whether the pressure in the insulating space 1030 reaches 1 mTorr or less. That is, when the pressure in the insulating space 1030 is 1 mTorr or less, it may be determined that no leakage occurs in the thermally insulated tank 1000. The leakage determination step may be performed before reducing the pressure in the insulating space 1030 and observing the pressure changes.

After the pre-vacuum step (1210), the insulating space 1030 may be filled with the insulator. At this time, the insulator consists of powder or beads, and preferably, may be hollow glass microspheres.

The first main-vacuum step (1220) may be performed after the insulating space 1030 is filled with the insulator. After the insulating space 1030 is filled with the insulator, gas in the insulating space 1030 may be discharged to the outside by the vacuum pump 1100 to reduce the pressure in the insulating space 1030 to a predetermined value or lower.

At this time, the pressure in the insulating space 1030 is 2,400 mTorr or less, preferably 1,000 mTorr or less, preferably 700 mTorr or less, preferably 500 mTorr or less, and preferably 300 mTorr or less. The temperature of the insulating space 1030 is room temperature, and the pressure in the insulating space 1030 is warm vacuum pressure (WVP).

The pressure in the insulating space 1030 is preferably as low as possible within a range where the Knudsen number is 10 or less, and for example, when the diameter of the insulator is 65 $\mu$m, the pressure in the insulating space 1030 may be 70 mTorr to 2,400 mTorr, preferably 100 mTorr to 1,000 mTorr, and preferably 300 mTorr to 700 mTorr.

In the vacuum maintenance test step (1230), gas in the insulating space 1030 is discharged to the outside using the vacuum pump 1100, thereby reducing the pressure in the insulating space 1030 to a predetermined value or lower. Thereafter, the pressure in the insulating space 1030 is measured for a predetermined time to observe pressure changes in the insulating space 1030.

At this time, if the pressure in the insulating space 1030 increases, moisture, gas, or the like may be discharged from the first shell 1010 or the second shell 1020 of the thermally insulated tank 1000 itself.

In the vacuum maintenance test step (1230), a process of observing pressure changes after reducing the pressure in the insulating space 1030 may be repeated multiple times. As such, while the process of observing pressure changes after reducing the pressure in the insulating space 1030 is repeated, when the increased level of the pressure in the insulating space 1030 is a predetermined value or lower, liquefied hydrogen may be loaded into the thermally insulated tank 1000. The vacuum maintenance test step (1230) may be continued until the pressure in the insulating space 1030 changes to about 100 mTorr or less, preferably about 70 mTorr or less, preferably about 50 mTorr or less, preferably about 30 mTorr or less, and preferably about 10 mTorr or less.

When liquefied hydrogen is loaded into the thermally insulated tank 1000, in the pressure measurement step (1240) of the thermally insulated tank, the pressure (cold vacuum pressure, CVP) of the insulating space 1030 may be measured. The liquefied hydrogen in the thermally insulated tank 1000 may lower the temperature of the insulating space 1030. As the temperature decreases, the pressure in the insulating space 1030 may decrease, and since the Knudsen number also decreases as the temperature decreases, the pressure in the insulating space 1030 may be easily reduced.

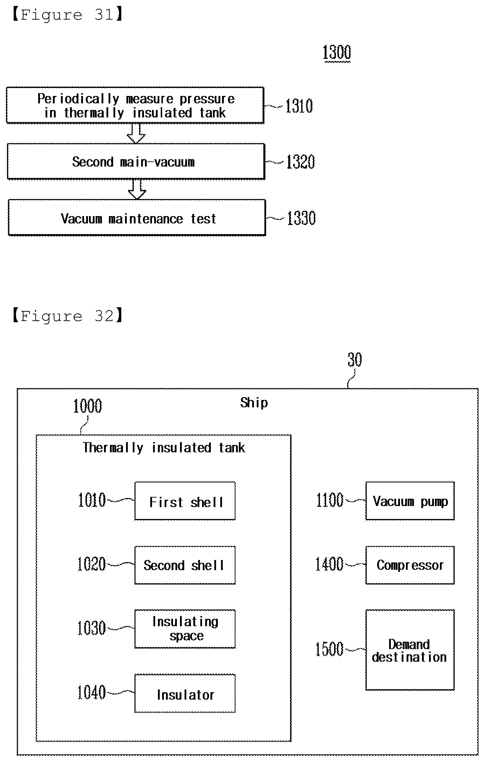

FIG. 31 is a flowchart of a second vacuum step of the method for forming the vacuum in the insulating space according to an embodiment of the present disclosure.

The second vacuum step (1300) may be performed after loading liquefied hydrogen into the thermally insulated tank 1000. Specifically, the second vacuum step (1300) may be performed after the liquefied hydrogen is loaded into the thermally insulated tank 1000 and then the ship equipped with the thermally insulated tank 1000 starts to operate.

The second vacuum step (1300) may include a step (1310) of periodically measuring pressure in thermally insulated tank, a second main-vacuum step (1320), and a vacuum maintenance test step (1330).

When the ship starts to operate, the pressure (CVP) in the insulating space 1030 may be measured periodically. At this time, when the pressure in the insulating space 1030 is higher than a predetermined pressure, the second main-vacuum step (1320) may be performed. At this time, the pressure in the insulating space 1030 may be 70 mTorr to 2,400 mTorr. Preferably, the pressure in the insulating space 1030 may be 100 mTorr to 1,000 mTorr, and preferably 300 mTorr to 700 mTorr.

The vacuum pump 1100 used in the second main-vacuum step (1320) is provided on the ship and may have specifications capable of forming a low vacuum in the insulating space 1030.

In the vacuum maintenance test step (1330), gas in the insulating space 1030 is discharged to the outside using the vacuum pump 1100, thereby reducing the pressure in the insulating space 1030 to a predetermined value or lower. Thereafter, the pressure in the insulating space 1030 is measured for a predetermined time to observe pressure changes in the insulating space 1030.

At this time, when the pressure in the insulating space 1030 increases, moisture, gas, or the like may be discharged from the first shell 1010 or the second shell 1020 of the thermally insulated tank 1000 itself.

In the vacuum maintenance test step (1330), a process of observing pressure changes after reducing the pressure in the insulating space 1030 may be repeated multiple times. As such, while the process of observing pressure changes after reducing the pressure in the insulating space 1030 is repeated, when the increased level of the pressure in the insulating space 1030 is a predetermined value or lower, the step (1310) of periodically measuring the pressure in the thermally insulated tank may be performed until the ship reaches its destination.

The second vacuum step (1300) may be performed after loading liquefied hydrogen into the thermally insulated tank 1000. Since the temperature of the insulating space 1030 is lowered by the liquefied hydrogen and the Knudsen number is also reduced, the gas flow in the insulating space 1030 may be maintained as at least one of a viscous flow, a slip flow, and a transition flow to a relatively lower pressure than at room temperature. That is, according to the second vacuum step (1300), a low Knudsen number is maintained to a lower pressure than at room temperature, and accordingly, the pressure in the insulating space 1030 may be rapidly reduced to a low pressure.

FIG. 32 is a diagram illustrating a thermally insulated tank and a ship including the same according to another embodiment of the present disclosure.

Referring to FIG. 32, the thermally insulated tank 1000 according to another embodiment of the present disclosure is a device for storing liquefied gas, including a first shell 1010 for accommodating liquefied gas therein, a second shell 1020 disposed outside the first shell 1010, and an insulating space 1030 disposed between the first shell 1010 and the second shell 1020, wherein the insulating space 1030 is a space filled with an insulator 1040 and vacuum-treated, and the insulator 1040 may be densely filled in the insulating space 1030.

For example, the insulator 1040 in the present disclosure may be an insulator in a powder or bead form.

In another example, the insulator 1040 in the present disclosure may include one or more of foamed plastic beads, polyurethane, polystyrene, polyethylene, polyisocyanurate, aerogel blankets, fumed silica, calcium silicate, mineral wool, glass wool, glass microfiber, perlite, and hollow glass microspheres.

The vacuum in the insulating space 1030 filled with the insulator 1040 may be a low vacuum, and the pressure in the insulating space 1030 may be 70 mTorr to 2,400 mTorr, preferably 100 mTorr to 1,000 mTorr, and preferably 300 mTorr to 700 mTorr.

The present disclosure is to optimize the pressure in the insulating space 1030 by considering both the vacuum holding time and the thermal insulation performance of the thermally insulated tank 1000, since it is preferable to reduce the pressure in the insulating space 1030 in the range where the Knudsen number is 10 or less in terms of the vacuum holding time, and it is preferable to reduce the pressure in the insulating space 1030 as much as possible in terms of the thermal insulation performance of the thermally insulated tank 1000.

In the present disclosure, the low vacuum is formed in the insulating space 1030, thereby enhancing the thermal insulation performance and reducing the generation of boil-off gas from the liquefied gas.

The ship 30 according to the present disclosure may include the first shell 1010, the second shell 1020, the insulating space 1030 disposed between the first shell 1010 and the second shell 1020 and filled with the insulator 1040, and the vacuum pump 1100 capable of adjusting the vacuum degree of the insulating space 1030 of the thermally insulated tank 1000, and may include a compressor 1400 used to transfer boil-off gas generated in the thermally insulated tank 1000 to the outside of the thermally insulated tank 1000.

The compressor 1400 may compress boil-off gas (BOG) generated in the first shell 1010 and transfer the compressed boil-off gas (BOG) to the outside of the thermally insulated tank 1000. As the boil-off gas (BOG) is transferred to the outside through the compressor 1400, the internal pressure of the first shell 1010 may be lowered to an atmospheric pressure or less.

In addition, the ship 30 may further include a demand destination 1500 capable of consuming liquefied gas in the first shell 1010. Specifically, the demand destination 1500 may be a device that consumes boil-off gas generated within the first shell 1010. For example, the demand destination 1500 may include an engine, a fuel cell, and a boiler. The boil-off gas generated in the first shell 1010 may be supplied by the compressor 1400 to the demand destination 1500 that consumes the boil-off gas.

For example, when the demand destination 1500 corresponds to a propulsion engine, the ship 30 may be propelled using the boil-off gas (BOG) generated from the thermally insulated tank 1000 as fuel.

Meanwhile, when the insulating space 1030 is filled with the insulator 1040 and a space between the insulators 1040 is formed in a vacuum state, exhaustion may not proceed smoothly at a location distant from the vacuum pump 1100 that forms the vacuum, and as the size of the thermally insulated tank 1000 increases, it may be difficult to form the vacuum in the insulating space 1030.

Referring to FIG. 25, the vacuum pipe 1140 may be disposed in the insulating space 1030 disposed between the first shell 1010 and the second shell 1020. That is, the insulating space 1030 may be filled with the insulator 1040 and vacuum-treated using only the vacuum pump 1100 to form the vacuum in the insulating space 1030, but the vacuum pipe 1140 extends into the insulating space 1030, and the vacuum pipe 1140 may be connected to the vacuum pump 1100 to extract gas from the inside of the insulating space 1030.

As such, the thermally insulated tank 600 according to the present disclosure may solve the problem of deteriorating exhaust performance as the distance from the inlet 716 increases by widely distributing the vacuum pipe 710 and the inlet 716 formed in the vacuum pipe 710 in the insulating space 630 to reduce the distance from the inlet 716 to each point of the insulating space 630.

In addition, the vacuum pipe 710 may be spaced apart from the central welding line 714 and fixed to the second shell 620 to prevent the deterioration of the structural stability and fixing force of the thermally insulated tank 600. In addition, when the vacuum pipe 710 is disposed diagonally or vertically, the plug 715 of the vacuum pipe 710 is positioned near a deck to facilitate connection of the pump pipe 711 to the plug 715 by an operator.

In addition, the pressure in the insulating space 1030 in the thermally insulated tank 1000 is lowered only to a predetermined value or higher to reduce the time for forming the vacuum, and simultaneously maintained to a predetermined value or lower to generate an amount of boil-off gas that may all be used as fuel in the thermally insulated tank 1000.

In addition, since the low vacuum is formed in the insulating space 1030, the required specifications of the vacuum pump 1100 are lowered, the installation and operating costs of the vacuum pump 1100 may be reduced, and the time to form the vacuum in the insulating space 1030 while the ship is docked may be reduced, thereby dramatically reducing a preparation time for departure.

In addition, since the liquefied hydrogen is loaded into the thermally insulated tank 1000 and then the pressure in the insulating space 1030 is reduced, a low Knudsen number is maintained to a lower pressure than at room temperature, and accordingly, the pressure in the insulating space 1030 may be rapidly reduced to a low pressure.

The present disclosure is not limited to the embodiments described above, and may include a combination of the embodiments or a combination of at least one of the embodiments and known arts as yet another embodiment.

In the above, although the present disclosure has been described in detail through detailed embodiments thereof, this is intended to specifically describe the present disclosure, and the present disclosure is not limited thereto, and it will be apparent that modification and improvement of the present disclosure can be made by those skilled in the art within the technical spirit of the present disclosure.

Simple modification and change of the present disclosure all belong to the scope of the present invention and a detailed protection scope of the present disclosure will be clear by the appended claims.

[Description of Symbols]

| 10: | Storage terminal | 20, 30: | Ship |
|---|---|---|---|
| 100: | Thermally insulated tank | 120: | First shell |
| 130: | Second shell | 140: | First insulating space |
| 142: | Insulator | 200: | Vacuum pump |
| 210: | Vacuum pipe | 300: | Compressor |
| 400: | Thermally insulated tank | 410: | First shell |
| 420: | Second shell | 430: | First insulating space |
| 440: | Second insulating space | 450: | Insulator |
| 460: | Insulating box | 462: | Load transfer member |
| 464: | Transfer unit | 470: | Vacuum pump |
| 472: | First vacuum pump | 474: | Second vacuum pump |
| 476: | Vacuum pipe | 480: | Pressure control unit |
| 482: | First pressure control unit unit | 484: | Second pressure control |
| 500: | Compressor | 600: | Thermally insulated tank |
| 610: | First shell | 620: | Second shell |
| 630: | Insulating space | 632: | Insulator |
| 640: | Temperature sensor | 650: | First pressure sensor |
| 660: | Gas sensor | 662: | Gas analyzer |
| 700: | Vacuum pump | 710: | Vacuum pipe |
| 800: | Compressor | 900: | Cargo hold |
| 910: | Second pressure sensor | | |
| 1000: | Thermally insulated tank | 1010: | First shell |
| 1020: | Second shell | 1030: | Insulating space |
| 1040: | Insulator | | |
| 1100: | Vacuum pump | 1110: | Pump pipe |
| 1120: | Manifold | 1130: | Manifold pipe |
| 1140: | Vacuum pipe | | |
| 1200: | First vacuum step | 1210: | Pre-vacuum step |
| 1220: | First main-vacuum step step | 1230: | Vacuum maintenance test |
| 1240: | Pressure measurement step of thermally insulated tank | | |
| 1300: | Second vacuum step | | |
| 1310: | Step of periodically measuring pressure in thermally insulated tank | | |
| 1320: | Second main-vacuum step step | 1330: | Vacuum maintenance test |
| 1400: | Compressor | 1500: | Demand destination |

**Claims**

1. A thermally insulated tank for storing liquefied gas, the thermally insulated tank comprising:

   a first shell for accommodating liquefied gas therein;
   a second shell disposed outside the first shell; and
   an insulating space disposed between the first shell and the second shell,
   wherein the insulating space is filled with an insulator and a low vacuum is formed therein.

2. The thermally insulated tank of claim 1, wherein gas molecules in the insulating space have at least one flow selected

EP 4 722 096 A1

from a viscous flow, a slip flow, and a transition flow.

3. The thermally insulated tank of claim 1, wherein the Knudsen number of the gas molecules in the insulating space is 10 or less.

4. The thermally insulated tank of claim 1, wherein the pressure in the insulating space is 70 mTorr to 2,400 mTorr.

5. The thermally insulated tank of claim 1, wherein the pressure in the insulating space is a predetermined value or lower, so that in the first shell, a consumable amount of boil-off gas is generated at a demand destination that consumes the boil-off gas.

6. The thermally insulated tank of claim 1, further comprising:

   a vacuum pump provided outside the thermally insulated tank to discharge gas in the insulating space to the outside,
   wherein the vacuum pump discharges the gas in the insulating space to the outside after the liquefied gas is loaded into the first shell.

7. The thermally insulated tank of claim 6, further comprising:
   a vacuum pipe having one end connected to the vacuum pump and the other end extending into the insulating space.

8. The thermally insulated tank of claim 7, wherein the vacuum pump is a low vacuum pump.

9. The thermally insulated tank of claim 8, wherein the vacuum pipe is disposed closer to the first shell than the second shell.

10. A ship comprising the thermally insulated tank of claim 1, the ship further comprising:

    a demand destination that consumes boil-off gas generated in the first shell,
    wherein the pressure in the insulating space is a predetermined value or lower so that the boil-off gas generated in the first shell becomes an amount consumable by the demand destination, and
    the boil-off gas generated in the first shell is consumed as propulsion fuel of the ship.

11. A method for forming a vacuum in an insulating space provided inside a thermally insulated tank and disposed between a first shell for accommodating liquefied gas and a second shell disposed outside the first shell, the method comprising:

    a first vacuum step of reducing a pressure in the insulating space,
    wherein the insulating space is formed in a low vacuum state.

12. The method of claim 11, further comprising:
    a second vacuum step of loading the liquefied gas into the thermally insulated tank, and then reducing the pressure in the insulating space using a vacuum pump provided outside the thermally insulated tank.

13. The method of claim 12, wherein the second vacuum step is performed after a ship including the thermally insulated tank starts to operate.

14. The method of claim 12, wherein the second vacuum step comprises

    a step of measuring the pressure in the thermally insulated tank; and
    a second main-vacuum step of repeating a process of discharging gas in the insulating space to the outside to reduce the pressure in the insulating space to a predetermined value or lower, and observing pressure changes in the insulating space, when the pressure in the thermally insulated tank is higher than a predetermined pressure.

15. The method of claim 12, wherein the second vacuum step comprises discharging the gas in the insulating space to the outside through a vacuum pipe having one end connected to the vacuum pump and the other end extending into the insulating space.

25

【Figure 1】

【Figure 2】

【Figure 3】

<u>600</u>

Cryogenic material (Drip tray)

【Figure 4】

600

PT — 650

632

610

630

620

Cryogenic material (Drip tray)

TT — 640

【Figure 5A】

【Figure 5B】

【Figure 6】

【Figure 7】

【Figure 8】

【Figure 9】

400

Thermally insulated tank

| 410 | First shell | 450 | Insulator | 480 | Pressure control unit |
| 420 | Second shell | 460 | Insulating box | 482 | First pressure control unit |
| 430 | First insulating space | 470 | Vacuum pump | 484 | Second pressure control unit |
| 440 | Second insulating space | 472 | First vacuum pump | | |
| | | 474 | Second vacuum pump | | |

【Figure 10】

400

N2 (472)
He or H2 (474)

LH2

410
430
420
440

Inner wall of ship body

N2 (482)
He or H2 (484)

450

【Figure 11】

400

470

480

410
430
420
440

Inner wall of ship body

LNG

450

【Figure 12】

400

N2 (472)
He or H2 (474)

450 460

N2 (482)
He or H2 (484)

LH2

410
430
420
440

Inner wall of ship body

【Figure 13】

【Figure 14】

【Figure 15A】

20

Ship                                400

Thermally insulated tank

410 — First shell          470 — Vacuum pump

420 — Second shell         480 — Pressure control unit

                                                        500

430 — First insulating space              Compressor

440 — Second insulating space

【Figure 15B】

【Figure 16】

【Figure 17】

【Figure 18】

400

464  462                                   470

480                                         410
                                            430
                LNG                         420
                                            440
                                       Inner wall of ship body

                450

【Figure 19】

462

464

【Figure 20】

462

464

【Figure 21】

【Figure 22】

【Figure 23】

【Figure 24】

【Figure 25】

【Figure 26A】

【Figure 26B】

【Figure 27】

Knudsen number

【Figure 28】

【Figure 29】

【Figure 30】

1200

Pre-vacuum ～1210

First main-vacuum ～1220

Vacuum maintenance test ～1230

Pressure measurement of thermally insulated tank ～1240

【Figure 31】

1300

```
┌────────────────────────────────┐
│ Periodically measure pressure  │~1310
│   in thermally insulated tank  │
└────────────────────────────────┘
              ⇓
┌────────────────────────────────┐
│       Second main-vacuum       │~1320
└────────────────────────────────┘
              ⇓
┌────────────────────────────────┐
│     Vacuum maintenance test    │~1330
└────────────────────────────────┘
```

【Figure 32】

30

Ship

1000

Thermally insulated tank

1010~ First shell

1020~ Second shell

1030~ Insulating space

1040~ Insulator

1100~ Vacuum pump

1400~ Compressor

1500~ Demand destination

## INTERNATIONAL SEARCH REPORT

| International application No. |
|---|
| **PCT/KR2024/007407** |

| | |
|---|---|
| **A. CLASSIFICATION OF SUBJECT MATTER** | |
| **B63B 25/16**(2006.01)i; **F17C 3/08**(2006.01)i; **F17C 13/00**(2006.01)i | |
| According to International Patent Classification (IPC) or to both national classification and IPC | |

| |
|---|
| **B. FIELDS SEARCHED** |
| Minimum documentation searched (classification system followed by classification symbols) |
| B63B 25/16(2006.01); B63B 11/00(2006.01); B63B 3/68(2006.01); B64D 37/30(2006.01); B65D 81/20(2006.01); B65D 90/06(2006.01); F02C 3/22(2006.01); F17C 3/02(2006.01); F17C 3/08(2006.01); F17C 3/10(2006.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 탱크(tank), 진공(vacuum), 펌프(pump), 단열(insulation), 배관(pipe) |

**C. DOCUMENTS CONSIDERED TO BE RELEVANT**

| Category* | Citation of document, with indication, where appropriate, of the relevant passages | Relevant to claim No. |
|---|---|---|
| X<br><br>Y | KR 10-2018-0137621 A (HANA POWER SYSTEM SERVICE CO., LTD.) 28 December 2018 (2018-12-28)<br>See paragraphs [0003], [0021]-[0025] and [0042]-[0057] and figures 2 and 5. | 1-5,11<br><br>6-10,12-15 |
| Y | KR 10-2023-0040425 A (JUNG-WOO ENE CO., LTD.) 23 March 2023 (2023-03-23)<br>See paragraphs [0075]-[0076] and [0124] and figure 4. | 6-10 |
| Y | KR 10-2016-0036837 A (DAEWOO SHIPBUILDING & MARINE ENGINEERING CO., LTD.) 05 April 2016 (2016-04-05)<br>See paragraphs [0064]-[0076] and figure 2. | 12-15 |
| X | KR 10-2021-0112386 A (LATTICETECHNOLOGY CO., LTD.) 14 September 2021 (2021-09-14)<br>See paragraph [0039] and figure 1. | 1,11 |

| | | | |
|---|---|---|---|
| ✓ Further documents are listed in the continuation of Box C. | | ✓ See patent family annex. | |

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br><br>**10 September 2024** | Date of mailing of the international search report<br><br>**10 September 2024** |
| Name and mailing address of the ISA/KR<br><br>**Korean Intellectual Property Office**<br>**Government Complex-Daejeon Building 4, 189 Cheongsa-**<br>**ro, Seo-gu, Daejeon 35208** | Authorized officer |
| Facsimile No. **+82-42-481-8578** | Telephone No. |

Form PCT/ISA/210 (second sheet) (July 2022)

## EP 4 722 096 A1

**INTERNATIONAL SEARCH REPORT**

| International application No. |
| --- |
| **PCT/KR2024/007407** |

### C. DOCUMENTS CONSIDERED TO BE RELEVANT

| Category* | Citation of document, with indication, where appropriate, of the relevant passages | Relevant to claim No. |
| --- | --- | --- |
| X | JP 2013-542874 A (GENERAL ELECTRIC COMPANY) 28 November 2013 (2013-11-28)<br>    See paragraph [0018] and figure 2. | 1,11 |
| X | KR 10-2013-0043737 A (DAEWOO SHIPBUILDING & MARINE ENGINEERING CO., LTD.) 02 May 2013 (2013-05-02)<br>    See paragraphs [0031]-[0038] and figure 2. | 1,11 |
| PX | KR 10-2023-0143585 A (HD KOREA SHIPBUILDING & OFFSHORE ENGINEERING CO., LTD.) 12 October 2023 (2023-10-12)<br>    See claims 1-17 and figures 1-32.<br>    (This document is a published earlier application that serves as a basis for claiming priority of the present international application.) | 1-15 |

## INTERNATIONAL SEARCH REPORT
### Information on patent family members

| International application No. |
|---|
| **PCT/KR2024/007407** |

| Patent document cited in search report | | | Publication date (day/month/year) | Patent family member(s) | | | Publication date (day/month/year) |
|---|---|---|---|---|---|---|---|
| KR | 10-2018-0137621 | A | 28 December 2018 | KR | 10-1972915 | B1 | 29 April 2019 |
| | | | | WO | 2018-231004 | A1 | 20 December 2018 |
| KR | 10-2023-0040425 | A | 23 March 2023 | | None | | |
| KR | 10-2016-0036837 | A | 05 April 2016 | CN | 107076357 | A | 18 August 2017 |
| | | | | EP | 3199446 | A1 | 02 August 2017 |
| | | | | EP | 3199446 | A4 | 02 May 2018 |
| | | | | SG | 11201702109 | A | 27 April 2017 |
| | | | | US | 2017-0299118 | A1 | 19 October 2017 |
| | | | | WO | 2016-048057 | A1 | 31 March 2016 |
| KR | 10-2021-0112386 | A | 14 September 2021 | AU | 2019-432673 | A1 | 26 August 2021 |
| | | | | CA | 3130445 | A1 | 10 September 2020 |
| | | | | CN | 113544429 | A | 22 October 2021 |
| | | | | CN | 113544429 | B | 06 June 2023 |
| | | | | EP | 3910232 | A1 | 17 November 2021 |
| | | | | EP | 3910232 | A4 | 21 September 2022 |
| | | | | JP | 2022-520267 | A | 29 March 2022 |
| | | | | JP | 7213363 | B2 | 26 January 2023 |
| | | | | KR | 10-2567420 | B1 | 17 August 2023 |
| | | | | SG | 11202108975 | A | 29 September 2021 |
| | | | | US | 11835182 | B2 | 05 December 2023 |
| | | | | US | 2022-0178496 | A1 | 09 June 2022 |
| | | | | WO | 2020-179956 | A1 | 10 September 2020 |
| JP | 2013-542874 | A | 28 November 2013 | CA | 2812233 | A1 | 05 April 2012 |
| | | | | EP | 2622255 | A2 | 07 August 2013 |
| | | | | EP | 2622255 | B1 | 12 April 2017 |
| | | | | JP | 2017-095095 | A | 01 June 2017 |
| | | | | US | 2014-0026597 | A1 | 30 January 2014 |
| | | | | WO | 2012-045035 | A3 | 31 May 2012 |
| KR | 10-2013-0043737 | A | 02 May 2013 | | None | | |
| KR | 10-2023-0143585 | A | 12 October 2023 | KR | 10-2023-0143971 | A | 13 October 2023 |

Form PCT/ISA/210 (patent family annex) (July 2022)